# EUROPEAN PATENT SPECIFICATION

(11) **EP 0 878 070 B1**
(45) Date of publication and mention of the grant of the patent: **24.08.2005**
(21) Application number: 96921415.4
(22) Date of filing: 07.06.1996
(51) Int. Cl.: H04J 3/02, H04L 12/28, H04L 12/56

(54) **COMMUNICATION ACCESS SYSTEM WITH DISTRIBUTED PROCESSING**
KOMMUNIKATIONSZUGANGSSYSTEM MIT VERTEILTER VERARBEITUNG
SYSTEME D'ACCES PAR UN RESEAU DE COMMUNICATION AVEC TRAITEMENT REPARTI

(30) Priority: 07.06.1995 US 486591
(43) Date of publication of application: 18.11.1998
(73) Proprietor: UTStarcom, Inc., Alameda, CA 94502 (US)
(72) Inventor: SCHOO, Daniel, L., Island Lake, IL 60042 (US); VARMAN, Richard, J., Deer Park, IL 60010 (US)
(74) Representative: Tomlinson, Kerry John
(86) International application number: PCT/US1996/009661
(87) International publication number: WO 1996/041434

(56) References cited:
- US-A- 5 412 660

## Description

### BACKGROUND OF THE INVENTION

This invention relates generally to the fields of telecommunications and the processes by which telephone calls are switched into and out of a computer system from a telephone line or other communications link. The invention is particularly suitable for use in an environment in which a high volume of calls are routed into or out of the computer system at the same time.

The methods disclosed herein can be performed by an element of communications equipment we have called a "network access server." The network access server is a device that receives incoming calls and routes them to a computer system via a network, or that receives calls from the network and routes them onto a communications link. In our distributed processing invention, a dramatic increase in the efficiency of the call routing process is achieved, thereby maximizing call throughput and minimizing the overall call connect time. This result is achieved by distributing computationally intensive protocol processing (such as Point-to-Point Protocol or PPP processing) among multiple computing platforms such as the modems of the network access server. Heretofore, the protocol processing has been performed in a single computing platform at the network interface.

Various types of communication devices are placed at the interface between a modem and a computer network, such as routers, terminal servers, and modules sometimes referred to as "gateway cards". These devices implement software programs that control the inflow and outflow of calls between the modems and the network. One layer of the software hierarchy that is run in these devices is known in the art as an "application layer". This document makes frequent reference to the terms "application", "application layer" and "application software layer". As used herein, these terms mean a communication control and management software layer above the protocol stacks in a communication device, the device typically placed at the gateway (or interface) between a modem and a computer network.

State of the art modems, such as the V.34 Quad Modem developed by U.S. Robotics Corp., of Skokie, Illinois, the assignee of the present invention, have a feature whereby two protocols are implemented in the modem. The first protocol is a modified version of an asynchronous High-level Data Link Control (HDLC) framing of Point-to-Point Protocol (PPP). The protocol could be synchronous HDLC framing of PPP in other implementations. The modem performs the flag sequence, data transparency, and Frame Check Sequence (FCS) on each PPP frame. The second protocol performed in the modem is Serial Line Internet Protocol (SLIP).

In the prior art, when an application software routine at the network access server gateway creates a PPP (or SLIP) frame, it checks each byte, looking for a byte that is a control character. If the application finds a control character, a PPP Escape character (or SLIP Escape character) is stuffed into the data stream. Then, the original control character is translated to a transparent character and stuffed into the data stream. This usually requires two buffers, because extra characters are added. For PPP frames, while the application is looking at each byte of the frame, it must also calculate the FCS. When the application receives a PPP (or SLIP) frame, it must do the reverse of the above process. In some network access servers, such as the U.S. Robotics NETServer, up to 60 modems may be active at any one time. This means that the gateway computing platform in the network access server would be doing this process for each of the 60 modems if the prior art technique was used. This results in a extremely heavy processing load on one computing platform, and introduces latencies and delays in the call routing process. These effects combine to significantly reduce call throughput, particularly where a large volume of calls are simultaneously received or transmitted through the network access server.

One prior art approach to increasing call throughput has been to incorporate communications controller hardware, such as the Cirrus Logic CL-CD 2430/CD 2431 device, into the protocol processing circuitry. The present invention eliminates the need for such expensive hardware devices, by enabling the performance of the protocol processing within existing computing platforms, such as the processors in the modems associated with the network access server.

US 5, 412, 660 describes ISDN-to-ISDN communication via a satellite system wherein a protocol conversion machine (PCM) converts the link access procedure D-channel (LAPD) protocol to the link access procedure modem (LAPM) protocol.

### SUMMARY OF THE INVENTION

According to one aspect of the present invention there is provided a method of routing incoming calls into a computer system as claimed in claim 1.

According to a second aspect of the present invention there is provided a network access server as claimed in claim 7.

There is disclosed a method for routing incoming or outgoing calls into or but of a computer system. For incoming calls, the method comprises the steps of receiving the incoming calls and routing the calls to a plurality of modems, distributing the processing of protocols for the incoming calls among multiple computing platforms, processing the protocols for the incoming calls, and subsequently routing the incoming calls to the computer system over a network. For outgoing calls, the calls are routed from the network to a plurality of modems in the network access server, distributing the protocol processing among a plurality of computing platforms, and sending the calls out to a communications link such as a T1 telephone line.

The disclosed method is performed in a network access server having a plurality of modems for receiving a plurality of incoming calls or modulating a plurality of calls onto a communications link. The computing platforms comprise the data processing structures in each modem.

The invention is a method for routing calls into a computer system via a modem, comprising the steps of receiving the incoming call at the modem, performing the processing of protocols for the incoming calls in a computing platform in the modem, and routing the incoming calls to the computer system. In the preferred embodiment, the use of the modem as the computing platform for the protocol processing relieves the computing platform at the interface between the modem and the computer system (such as the computing platform in the router) of the protocol processing burden, and reduces latency in the call routing process, reducing the overall call connect time.

### BRIEF DESCRIPTION OF THE DRAWINGS

Presently preferred embodiments of the invention are depicted in the drawings, wherein like reference numerals refer to like elements in the various views, and wherein:
FIG. 1A is a block diagram illustrating one form in which the invention may be implemented;
FIG. 1B is a block diagram illustrating the implementation of the routing function of FIG. 1A in the operating system software of a host computer;
FIG. 2 is an illustration of the overall communications system in which an alternative form of the invention is implemented, illustrating the relationship between various call originators, a telephone network, a network access server, and a host computer system linked to the network access server via a network;
FIG. 3 is a schematic block diagram of the network access server of FIG. 1;
FIG. 4 is a schematic block diagram showing the connection of the application module and the modem modules of FIG. 3;
FIG. 5 is a detailed block diagram of a preferred form of a quad modem module of the type shown in FIG. 3, the distributed processing according to the present invention being performed by the modem module processing units;
FIG. 6 is a flow chart of the distributed processing procedure;
FIG. 7 is a detailed flow chart of the PPP routine of FIG. 6;
FIG. 8 is a graph of the upload throughput using prior art computation in a single platform at the PPP protocol network gateway;
FIG. 9 is a graph of the upload throughput when the distributed processing technique according to the teaching of the present invention is used;
FIG. 10 is a graph of the download throughput when the PPP processing is performed according to the prior art technique of a single platform at the network gateway; and
FIG. 11 is a graph of the download throughput when the distributed processing technique according to the teachings of the present invention is used.

### DETAILED DESCRIPTION OF THE PREFERRED EMBODIMENT

### I. General Discussion

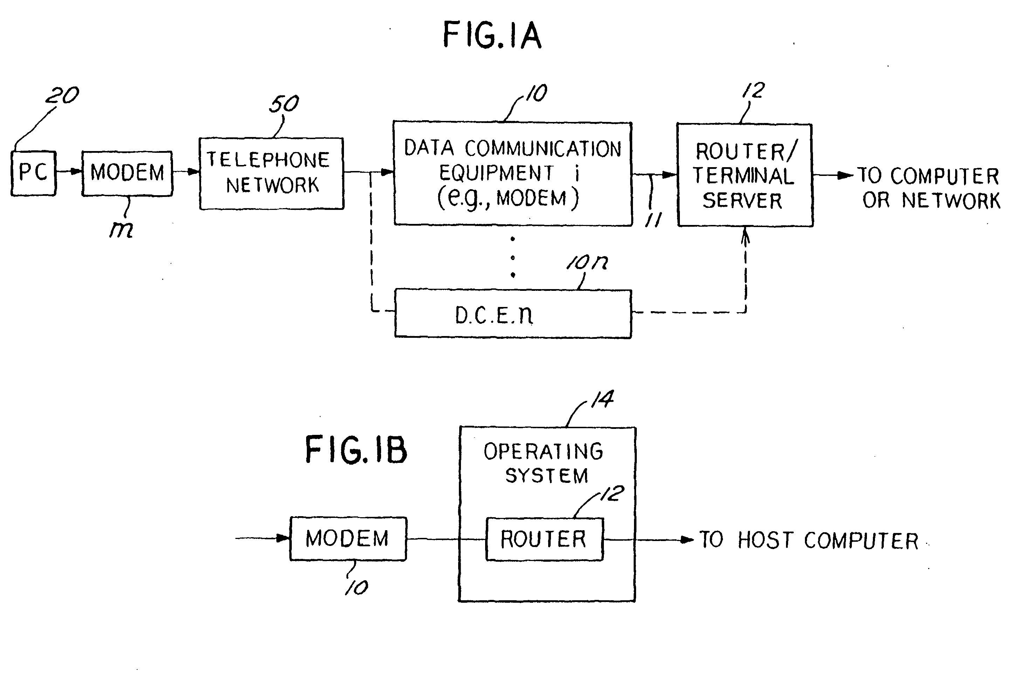

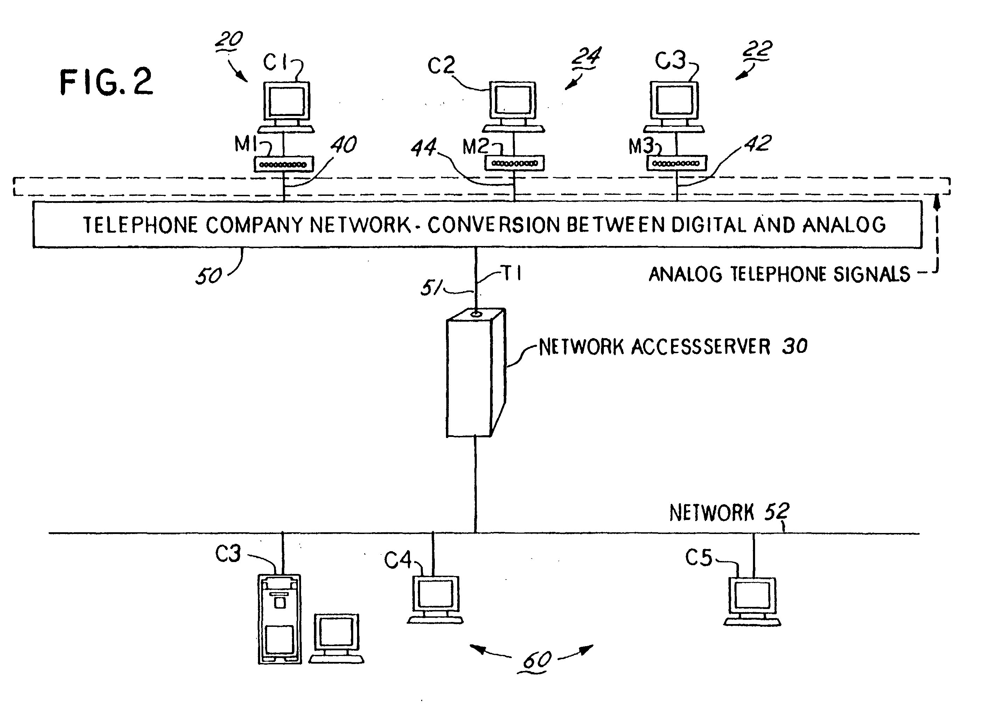

Referring to FIG. 1A, the invention may be implemented in a communications system in which a call originates from a computer, such as a PC 20, which sends data via a Data Communications Equipment (DCE) (such as modem M) onto telephone network 50 or other communications link to a receiving DCE 10, such as a modem. The call originating data terminal 20 has communication software that uses a communications protocol, such as PPP or SLIP. The DCE 10 demodulates the call from the personal computer 20 and passes it over a transmission means 11, for example an RS 232 cable or packet bus, to a router or terminal server 12. The router or terminal server 12 passes the call onto a network or host computer system, for example a personal computer (not shown in FIG. 1A). Up to n DCE's 10 may be provided, depending on the amount of expected incoming traffic. Or, for some applications, only a single DCE or modem 10 may be required. The DCE 10 and router 12 functions may be implemented in physically distinct hardware, or combined into a single piece of equipment such as in the case of the network access server discussed in conjunction with FIG. 2.

In a preferred form of the present invention, the byte to byte transparency translation processing required by the PPP (or SLIP) protocol is distributed to the DCE 10 processor, rather than being performed in a computing platform in the router or terminal server 12 as in the prior art. This frees the application processor (such as the computing platform at router or terminal server 12) from this time consuming task. The modem 10 processor already deals with the data on a byte by byte process as it passes data to or from the modem's data pump. The additional task of data transparency and FCS calculating is not as burdensome as it is for a multi-session application, and hence the modem processor is a preferred computing platform in which to implement the invention.

In our preferred form of the invention, the application software processor at the network interface communicates with the modems 10 via a packet bus, but the communication could be by other equivalent means, such as an RS 232 cable. Two types of messages are passed between them, configure requests and responses, and data. Other message types are currently not applicable to this implementation. All messages have a status field and a length field. There is exactly one PPP or SLIP frame transmitted or received per each packet bus data message. The length field holds the exact number of untranslated data bytes. This is how the modem knows where to insert the flag sequence on outgoing frames.

The basic design of the PPP/SLIP modem 10 is for the gateway application software at the router/terminal server 12 to issue a special command to the modem 10 that puts the modem into PPP mode, SLIP mode, or neither. Other configuration commands that can be issued include: local Async-Control-Character-Map, remote Async-Control-Character-Map, local Delete character translation (i.e. ASCII 7F hex), remote Delete character translation, maximum frame size, frame timeout, inter-character timeout, and FCS type (eg. CCITT 16 bit CRC). The modem 10 informs the application software when it is successfully configured.

When the modem 10 receives a data message from the application layer for transmission to the remote PC 20, the modem 10 knows how much data is in the message from the length field. The modem then creates a PPP or SLIP frame by transmitting a frame end character, transmitting the data (translating as required), calculating and transmitting the FCS if it is a PPP frame, then transmitting another frame end character. Note that the PPP address and control fields should be prepended to the PPP data when passed to the modem because the modem does not interpret any data.

When the modem 10 receives a PPP or SLIP frame from the remote location, the modem 10 searches for start of the frame character (which is also the frame end character). This character is discarded. The modem then examines each incoming byte of data, translating transparent data as required and keeping a current FCS if it is a PPP frame, while looking for the trailing frame end character. The trailing frame end character is also discarded. If the modem is configured for PPP, the current FCS value is confirmed to be valid and the last two (or four) data characters, which are the FCS characters, are also discarded (i.e., the length is decremented). This frame of raw data (prepended by the address and control fields if PPP) is immediately passed to the application layer in the gateway (such as the router/terminal server 12) via a packet bus or an equivalent menas, such as an RS 232 cable. Status values indicate OK, invalid FCS, frame too large, inter-char timeout, frame timeout, and parity error (frame aborts are discarded and the application layer is not informed).

Note that, using the techniques of the present invention, the application computing platform at the network interface never sees any transparent data. It deals with the actual information in the PPP or SLIP frame. Also note that the modem does not interpret the contents of any PPP or SLIP frame. It only does the most basic encapsulation of a datagram over a serial link, i.e., byte by byte transparency translation and FCS. The PPP address and control field and any negotiation, such as LCP or IPCP, are handled at the application software layer. Accordingly, by using the techniques of the present invention, data through-put in both the uploading and downloading directions through the modem 10 and router/terminal server 12 is greatly improved. This is a result of both reduced processing requirements at the gateway computing platform, and a lower overall latency of the system.

Referring again to FIG. 1A, it will be understood that other analogous and functionally equivalent DCE's may be used in accordance with the invention besides the modem 10. For example, other kinds of modems, such as a DSU (data synchronizer unit) and CSU (circuit switching unit) may be used in conjunction with a digital data network 50. An ISDN (integrated services digital network) terminal adapter may also be used where the calls come in via ISDN lines. The term "modem" in the claims is intended to be broadly interpreted to include all such functionally equivalent devices.

Referring to FIG. 1B, it will be appreciated that the physical location of the router or terminal server 12 is not particularly important. For example, the router function may exist as a software feature in an operating system 14 for a personal computer, for example, the various versions of the Windows™ program of Microsoft Corporation. In this example, the protocol processing is performed in the modem 10. By virtue of the distribution of the protocol processing to the computing platform in the modem 10, rather than in the CPU for the computer, the computational load on the CPU and the latency in the call routing process are reduced, providing for increased call throughput.

Additionally, the particular means for transmitting the calls from the modem to the gateway is not particularly important. An RS 232 cable, a packet bus, or the internal bus of a host personal computer (such as the ISA, EISA, PCI or a VESA bus) may be used.

### II. Preferred Network Access Server Implementation

The present invention is implemented in a communication processing system that is depicted generally in FIG. 2. A plurality of call originators 20, 22 and 24 are located at various remote locations, which transmit incoming communications to a network access server 30. Call originator 20, 22 and 24 may consist of a personal computers C1, C2 and C3, respectively, that generates digital data and transmits the data to a modems M1, M2, and M3, which modulate the data onto a telephone lines 40, 42 and 44, respectively. For the purpose of this specification, the particular type of call originators is not important, and the call originators of FIG. 2 are chosen for purposes of illustration only. The call originators have communication software that uses the PPP or SLIP protocol.

In FIG. 2, the data that is transmitted onto the telephone lines at 40, 42 and 44 is in analog form. The illustration in FIG. 2 assumes that the communication system makes use of the digital public switched telephone network (PSTN) 50 such as the T1 network. The calls from the call originators are digitized and placed into one of the 24 multiplexed channels of the four-wire T1 span line 51 by the telephone company and fed into the network access server 30. As used herein, the term T1 span line refers to twenty-four 64 kbps (thousand bit per second) DS0 channels that are multiplexed in the 1.544 Mbps DS1 rate, with each DS0 channel carrying the digital representation of an analog voice channel. The term "trunk", as used herein, refers to a single DS0 channel.

The digital signals representing the incoming communications are fed into the network access server 30 by the T1 span line 51 (or possibly two span lines). The network access server 30 then routes the incoming call onto the network 52. The network may be a Token ring network. Ethernet, or other type of network, the particular details of which are not important. The host computer system 60 then receives the call and processes the calls as needed. The host computer system 60 depicted in FIG. 2 consists of a variety of computers such as a personal computer C4, data storage terminal C5, and mainframe computer C3. As was the case with the call originators 20, 22 and 24, the details of the host computer system 60 and its constituent components, are not particularly important. The host computer system 60 has the capability of sending out calls via the network access server 30 to the remote data terminals (such as call originator 20).

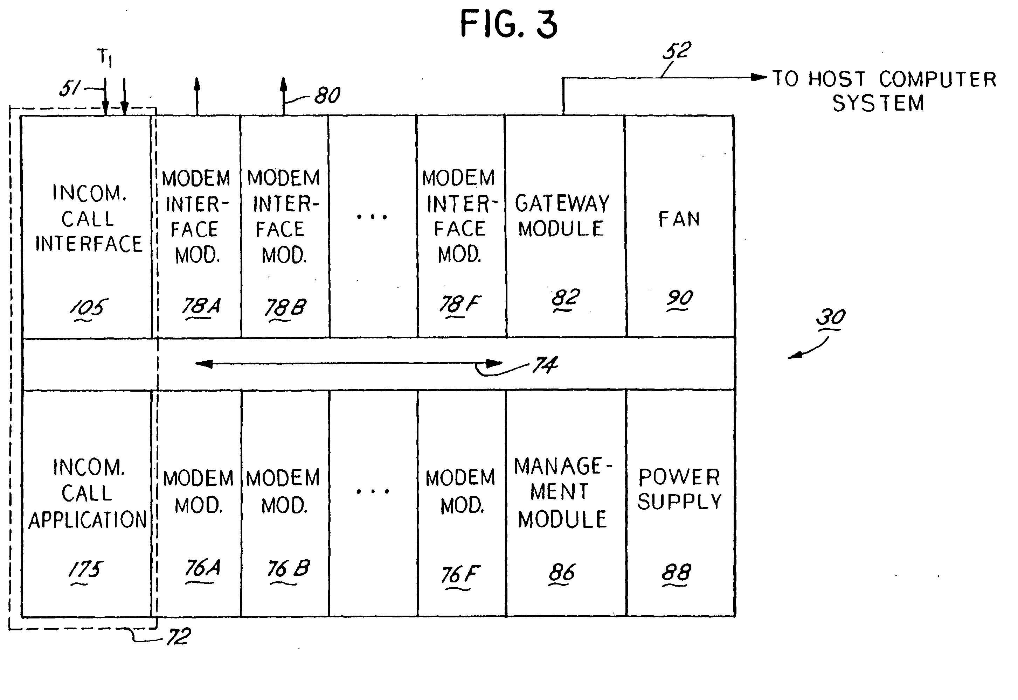

Referring now to FIG. 3, the network access server 30 is shown in a functional block diagram form and will be described in more detail. The network access server 30 has a chassis 70 which houses a telephone interface unit 72 which receives the incoming calls on T1 span line 51, demultiplexes the calls, and routes the calls over a high speed time division multiplexed (TDM) bus complex 74 to twelve quad modem modules 76A, 76B, etc. Each modem module 76 has four modems (not shown in FIG. 3) which demodulate the incoming calls. Thus, if there are two T1 span lines 51 incoming to the network access server 30, there are 48 modems in all for the 48 DS0 channels incoming into the network access server 30. The connections on the TDM bus complex between the telephone interface unit and the modems are static or "nailed up" connections, and are established on power-up of the network access server 30. The TDM bus complex 74 carries data back and forth between all of the various modules of the network access server 30. The bus complex 74 is described in greater detail below.

Each modem module 76 is provided with a corresponding modem network interface module 78A, 78B, etc. The modem network interface modules 78 have four sync/async RS 232 ports 80. The RS 232 ports 80 are linked to computers of the host computer system and may be used to output the calls from the network access server 30 to the host computer (and thus act as a "network" 52 as that term is used herein).

The network access server 30 also includes a gateway application module 82, which functions as an interface between the software which governs the operation of the network access server 30 and the software of the host computer system. The gateway application module 82 tells the modems in the modem modules 76 what modulation scheme to use for the incoming calls, whether the call is synchronous or asynchronous, and what error correction protocol to follow. The gateway application module 82 also tells the modems whether to send the calls out the RS 232 ports 80 or whether to send the calls to the network 52 and host computer system 60. The gateway application module 82 contains suitable data processors, memories and other hardware, the details of which those of skill in the art are familiar and are not of particular importance here. A network management module 86 provides management and supervision functions for the network access server 30. A power supply module 88, supplying power to all the modules in the incoming call interface, is also incorporated into the chassis 70. The power supply module consists of two power supply units that perform ac to dc power conversion, providing full redundancy in the case of failure in one of the units. The power supply units in module 88 are designed according to standard methodologies. A high speed cooling fan 90 is provided in the chassis 70 to dissipate heat generated by the power supplies during operation of the network access server. A power on/off switch (not shown) is provided to turn the whole unit 30 on and off.

The chassis 70 is a standard 19" card cage, and has provisions for 16 front-loading application cards and 16 rear-loading interface cards, and a network management module and associated interface module.

### A. Telephone Interface Unit 72

The telephone interface unit 72 of FIG. 3 is composed of two separate modules, an incoming call interface module 105 and an incoming call application module 175. The purpose of interface module 105 is to physically receive the incoming T1 span lines, convert the signal in a digital TTL format, and deliver the signal to the call application module 175. Interface module 105 provides a CSU interface which recovers clock signals and data from the incoming T1 signals, and also provides the transmission of outgoing digital telephone signals representing digital data to line T1. Module 105 is connected to application module 175 via a backplane connector. Application module 175 provides framing of recovered T1 data to extract the T1 DS0 channel data and then switches the channel data to the modem modules 76 via the TDM bus 74.

It will be appreciated that the time division multiplex (TDM) bus complex 74 includes a frame sync line, a time slot (TS) clock line, a bit clock line and two data highway lines. A packet bus is also provided for transmitting communications between the modules of the network access server 30.

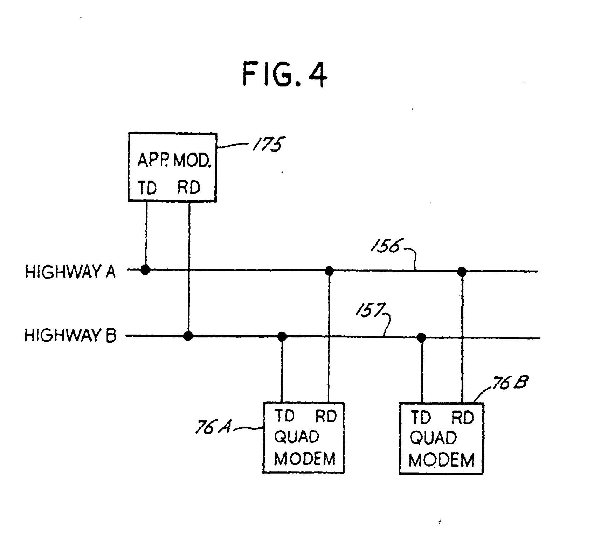

As shown in FIG. 4, data is directly written from the transmit (TD) terminal of application module 175 (FIG. 3) to the receive terminal (RD) of one of the quad modems (e.g., 76A or 76B) and vice versa, via data highway lines 156, 157.

### B. Modem Modules 76 and 78 Detailed Description

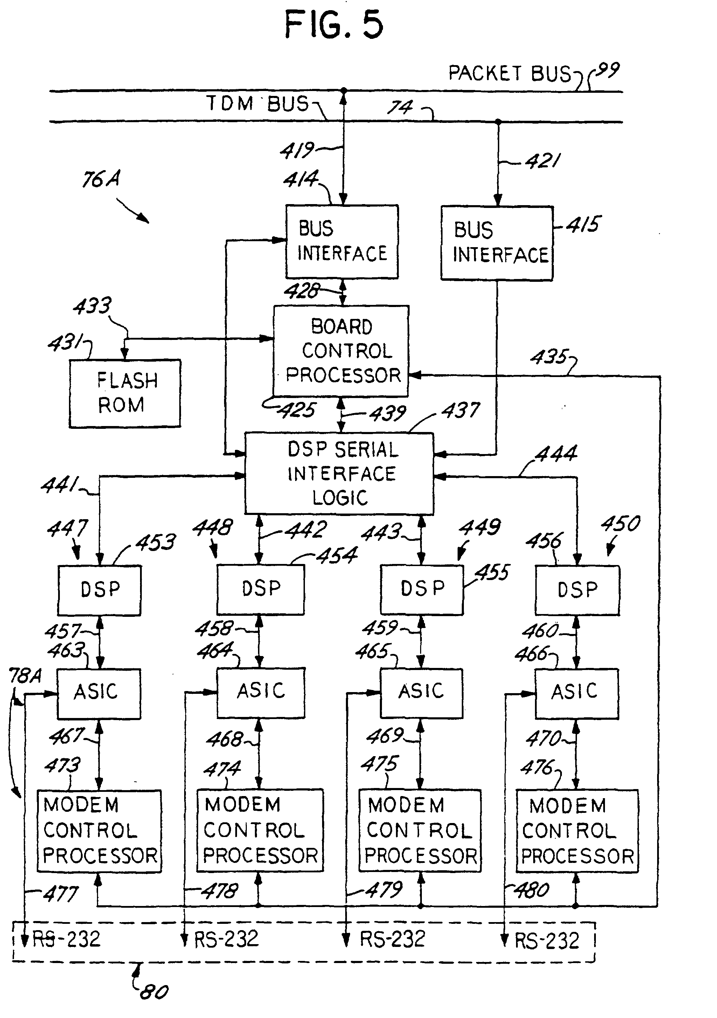

FIG. 5 illustrates a representative quad modem module 76A which is identical to the other modem modules of the network access server. Each of modem modules 76 contains four modems for a total of 24 modems. As a result, the network access server 30 can handle a total of 24 simultaneous full duplex channels of data communication. If two T1 span lines are inputted into telephone interface unit 72 (FIG. 3) then 12 modem modules may be provided to handle 48 simultaneous full duplex channels. Of course, additional capacity may be provided if desired.

Modem module 76A comprises a bus interface unit 414 that communicates with packet bus 99 through output bus 419. A board control processor 425 communicates over buses 428, 433 and 435. A flash ROM 431 provides memory for processor 425. Flash ROM also contains the code for the modem control processors 473-476 as well as the digital signal processors 453-456. Bus interface 415 communicates with TDM bus 74 over bus 421.

Digital signal processor serial interface logic 437 communicates with processor 425 over a bus 439 and communicates with individual modems 447-450 over buses 441-444, respectively. Each of modems 447-450 is identical. The modems comprise digital signal processors 453-456, application specific integrated circuits (ASICs) 463-466 and modem control processors 473-476 connected as shown over buses 457-460 and 467-470. Processors 473-476 communicate with processor 425 over bus 435. ASICs 463-466 provide RS-232 ports 477-480. These ports, together with the comparable ports from modem modules 76B-76F form a group of modem network interface modules 78A-78F (FIG. 3) for coupling digital signals to the host computer system. The hardware for each of modems 447-450 is substantially the same as the hardware found in the USR Courier Dual Standard modem manufactured by U.S. Robotics, Inc., Skokie, Illinois.

Board control processor 425 performs the following functions: control of the reception and transmission of packets to and from a management bus (not shown), multiplexing tasks for the packet bus 99, controlling the code set for the entire modem module 76A, and distributing (i.e., downloading) code to the modems in the module 76A.

Interface logic 437 performs the following functions: handles the interface to the TDM bus 74, counts the time slots, and multiplexes and demultiplexes signals in the TDM bus 74.

The protocol processing for the incoming and outgoing calls, in the present embodiment of the invention, is distributed among the four modem control processors 473, 474, 475, and 476. The data processing and modem control processing functions of DSP 453 and modem control processor 473 may be combined into a single digital signal processor.

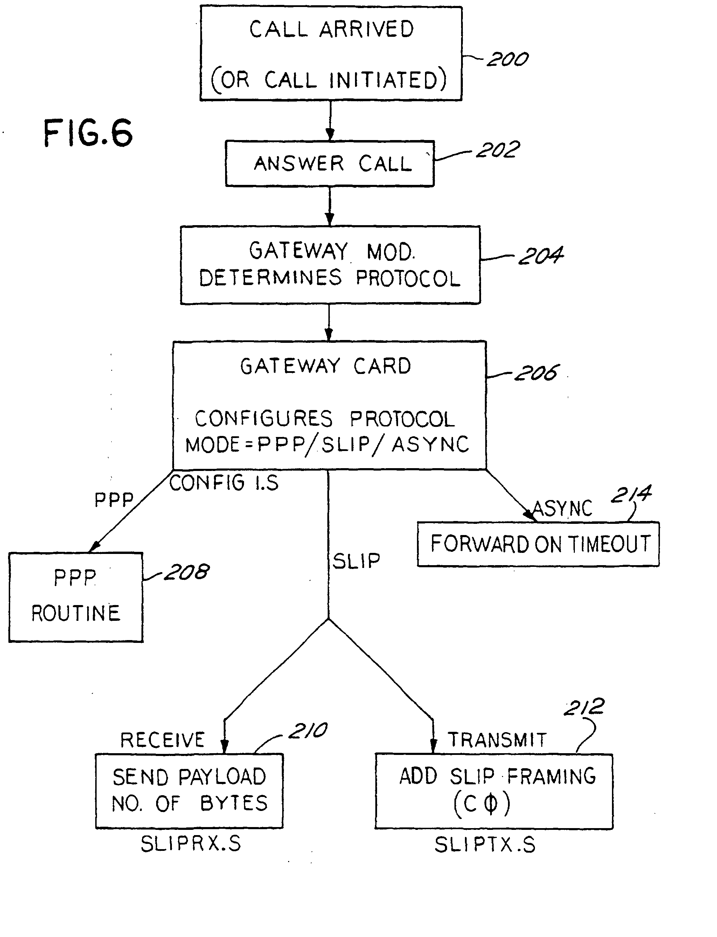

The circuits shown in Fig. 6 are available commercially as indicated in the following table:

| Circuits | Manufacturer & Model Number |
|---|---|
| Bus interface 414 | Xilinx 3064 |
| Board control processor 425 | Intel 80C188EB |
| Flash ROM 431 | Intel 28F020 |
| DSP serial interface logic 437 | Xilinx 3042 |
| DSPs 453-456 | Tex. Inst. 32OC51 |
| ASICs 463-466 | US Rob. 1.016.684 |
| Modem control processors 473-476 | Intel 80C188EB |

### III. Distributed Processing of PPP and SLIP protocols

With the above description in mind, the reader's attention is directed to FIG. 6, which is a flow chart of the distributed processing procedure according to the preferred form of the present invention. The following discussion is made in reference to the network access server embodiment of the invention, and persons of ordinary skill in the art will readily understand that the description can be adapted to other possible embodiments.

At step 200, a call is arrived from one of the remote call originators, or else a call is initiated from the host computer system to a remote computer or other data terminal. At step 202, the call is answered in a well known manner. At step 204, the gateway application module 82 (FIG. 3) determines the protocol of the incoming or outgoing call. This is done by determining, for example, the port configuration of the call, by the telephone number of the call originator or the call destination, by conversation or menu with the user, by the user name and a database look-up, by an automatic detect or inspection of data routine, or whatever other process is implemented.

At step 206 the gateway module 82 configures the protocol mode for the modem. The software routine in CONFIG1.S is implemented in this step. If the asynchronous transparent protocol is performed, at step 214 a forward on timeout or buffer full command is sent to the modem in the modems module 76. If the SLIP protocol is used, for receiving calls at step 210 the modems remove transparency and translation characters, and send the payload (a number of bytes) or overflow errors to the gateway module 82. In the appended software listing, routines in SLIPRX.S are implemented at this step. For transmitting calls, at step 212 the modems add transparency translation characters and a SLIP framing character. In the appended software listing, the routines in SLIPTX.S are implemented.

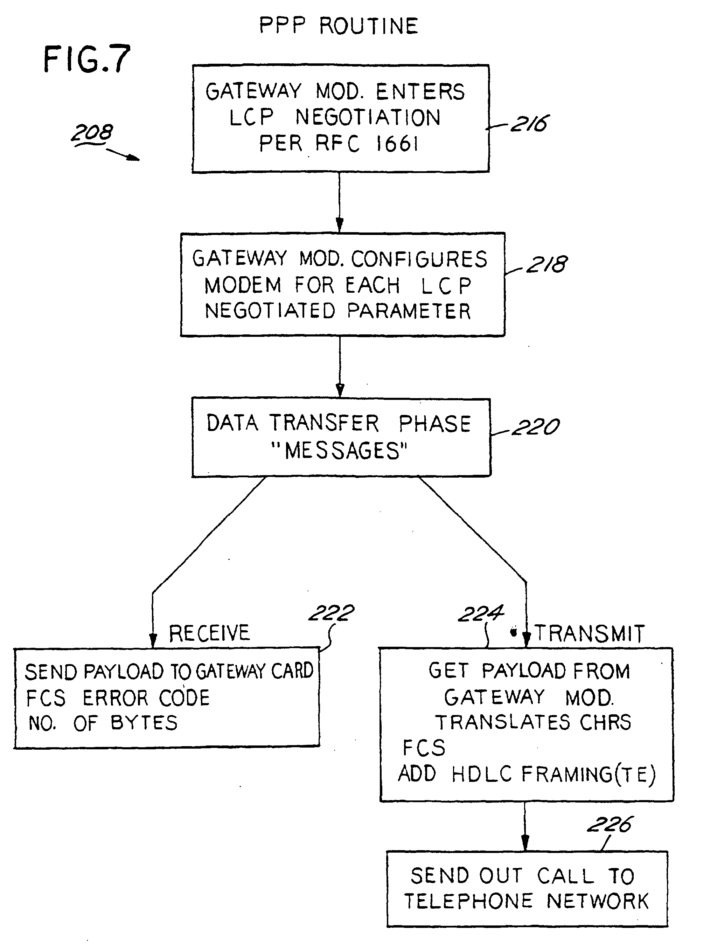

If PPP protocol is used, the routine in CONFIG1.S is implemented at step 208. Step 208 of FIG. 6 is shown in detail in FIG. 7. Referring now to FIG. 7, at step 216 the gateway module 82 enters the LCP negotiation procedure per the instructions set forth in the Request For Comments: 1661 Standard.

The Requests For Comments (RFC) 1661 Standard is a publicly available document which specifies an Internet standards track protocol for the Internet community. Persons of ordinary skill in the art are familiar with the RFC 1661 document.

At step 218, the gateway module configures the modems for each LCP negotiated parameter. This may be accomplished in order, for example, MTU, TX Async map, RX Async map. In the appended software listings, the routine in CONFIG2.S describe this procedure. The procedure then enters a data transfer phase at step 220 in which "messages" are uploaded or downloaded through the network access server 30. In the receiving or uploading direction, the modems remove the HDLC frame characters, and send the payload, number of bytes and error code (such as good FCS, bad FCS, overrun, or partial). This procedure is set forth in the appended software listing PPPRX.S.

In the transmitting (downloading) direction at step 224, the modems get the payload from the gateway module 82, perform character transparency translation and transmit asynchronous map, calculate the FCS, and add HDLC framing characters. At step 226, the messages are sent out through the telephone network 51. This procedure is set forth in the PPPTX.S routine in the appended listing.

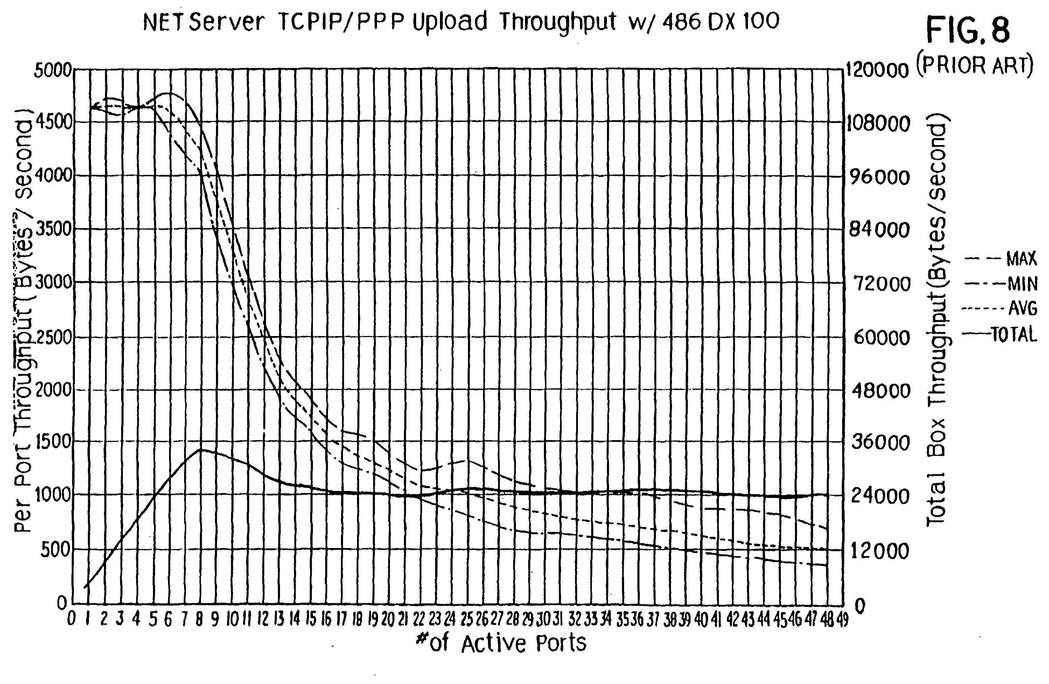

One representative example illustrating the advantages of the invention in terms of throughput over the prior art methods can be seen in FIGS. 8 - 11. FIG. 8 is a graph of the upload throughput using prior art computation in a single platform at the PPP protocol network gateway. Note that the total throughput of the network access server remains substantially constant after a peak is reached with 8 active ports and levels out at 17 active ports at 24,000 bytes per second. The per port throughput starts off quite high at roughly 4600 bytes per second for a small number of active ports (that is, less than 10), but drops dramatically at higher numbers of active ports. Thus, FIG. 8 illustrates the processing "bottleneck" that occurs when the PPP protocol processing is performed in a single platform at the network interface.

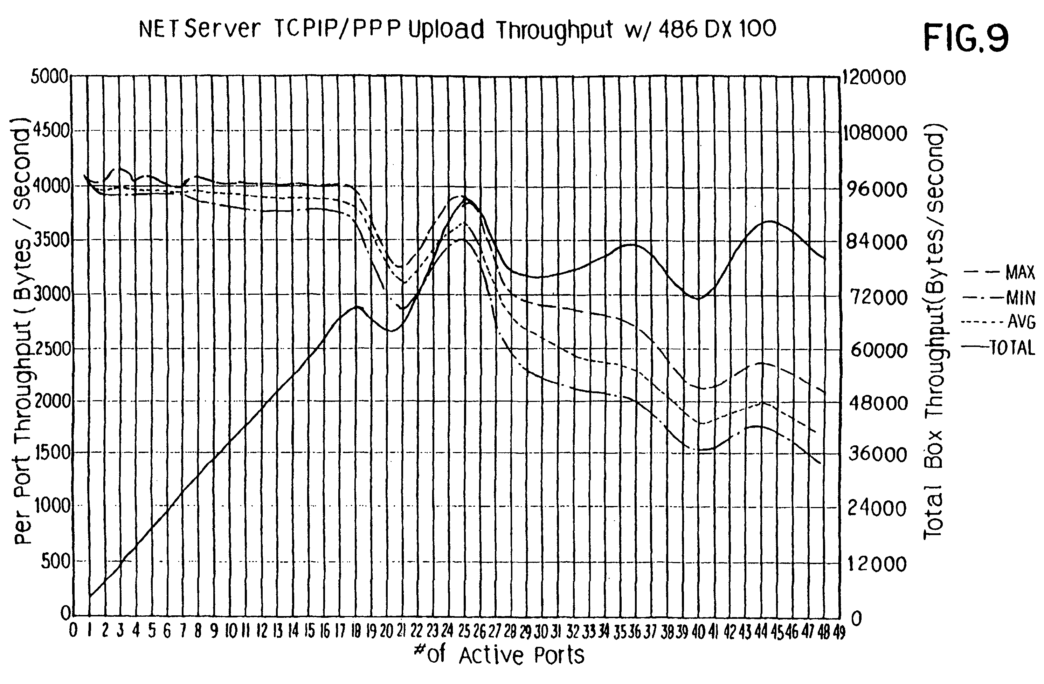

FIG. 9 is a graph of the upload throughput when the distributed processing technique according to the teaching of the present invention is used. Note that in FIG. 9 the total throughput rises steadily up to 18 ports, dips slightly between 18 and 21 ports, and then increases up to total throughput of approximately 92,000 bytes per second with 25 active ports. Between 25 and 48 active ports, the total throughput remains between roughly 72,000 bytes per second and 86,000 bytes per second. This is approximately 3 to 4 times the total throughput as compared to the results of FIG. 7. The inventors predict that further improvements in system tuning would smooth out the oscillations in system throughput shown in FIG. 9, especially for higher numbers of active ports. Note also that the average per port throughput using the techniques of the present invention remains relatively high as the number of active ports increases, accomplishing an efficiency improvement of more than 3 times compared to the results of FIG. 8, particularly at higher volumes of active ports.

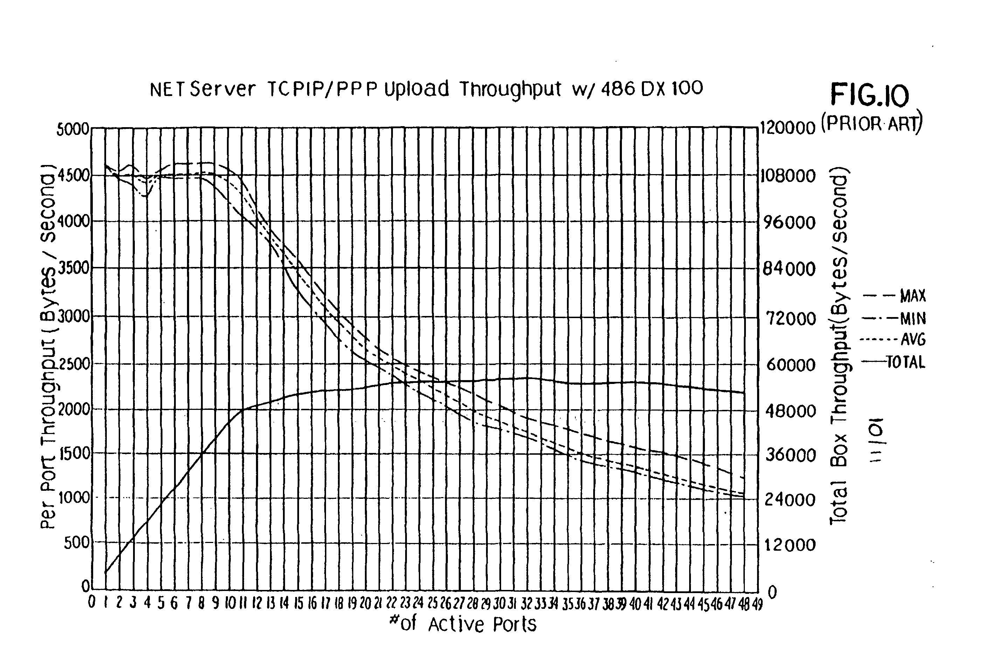

FIG. 10 is a graph of the download throughput when the PPP processing is performed in the prior art technique of a single platform at the network gateway. In FIG. 10, note that the total download throughput levels off at approximately 55,00 bytes per second between above 20 active ports when the prior art techniques are used. The average per port throughput starts at roughly 45,000 bytes per second with under 10 active ports, but this value drops steadily to a low of approximately 12,000 bytes per second when 48 active ports are used.

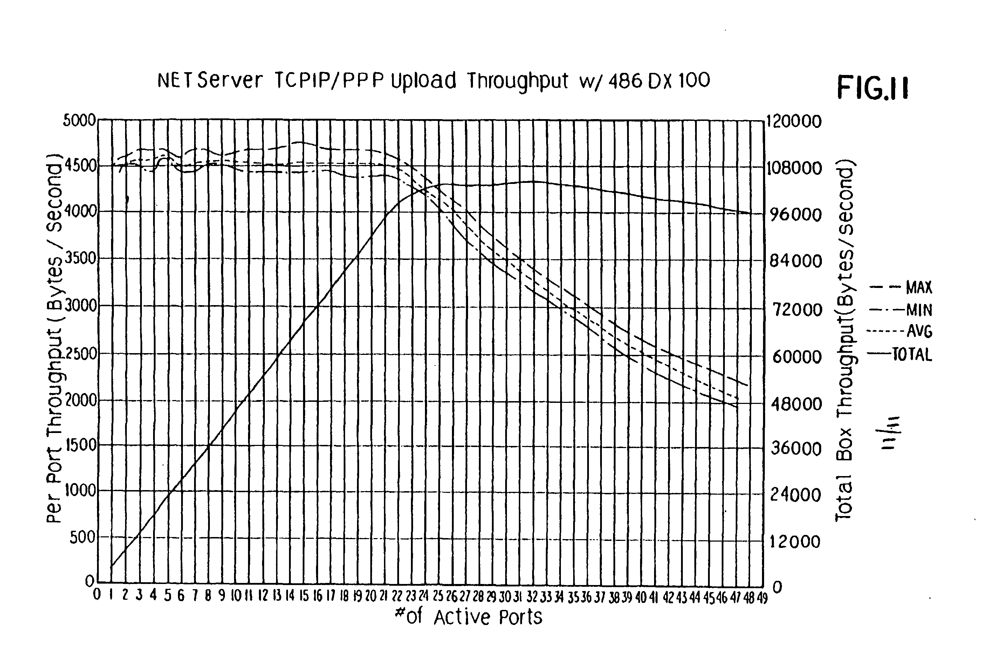

FIG. 11 is a graph of the download throughput when the distributed processing technique according to the teachings of the present invention is used. Note that the total download throughput using the techniques of the present invention rises steadily to a high of approximately 104,000 bytes per second when 26 active ports are used and remains relatively constant at higher levels of call activity. As can been seen by comparison of FIG. 11 to FIG. 10, this is a substantial improvement in call throughput. The average per port throughput using the techniques of the invention remains relatively constant at 4500 bytes per second up to 22 ports and this value drops gradually to approximately 2000 bytes per second when 48 ports are used. This represents an improvement of approximately 2 to 1 over the download per port throughput, particularly at higher call volumes.

Presently preferred software routines for implementing the procedures shown in FIG. 6 and FIG. 7 are set forth in code form below. A person of ordinary skill in the art will appreciate that the code represents but one example of the implementation of the invention in a network access server environment. The code is stored and executed in the modems of the modem modules 76 of FIG. 3. The software routines in the gateway module 82 that interact with the modem software routines comprise relatively simple higher level control routines, which can be readily developed by persons of ordinary skill in the art.

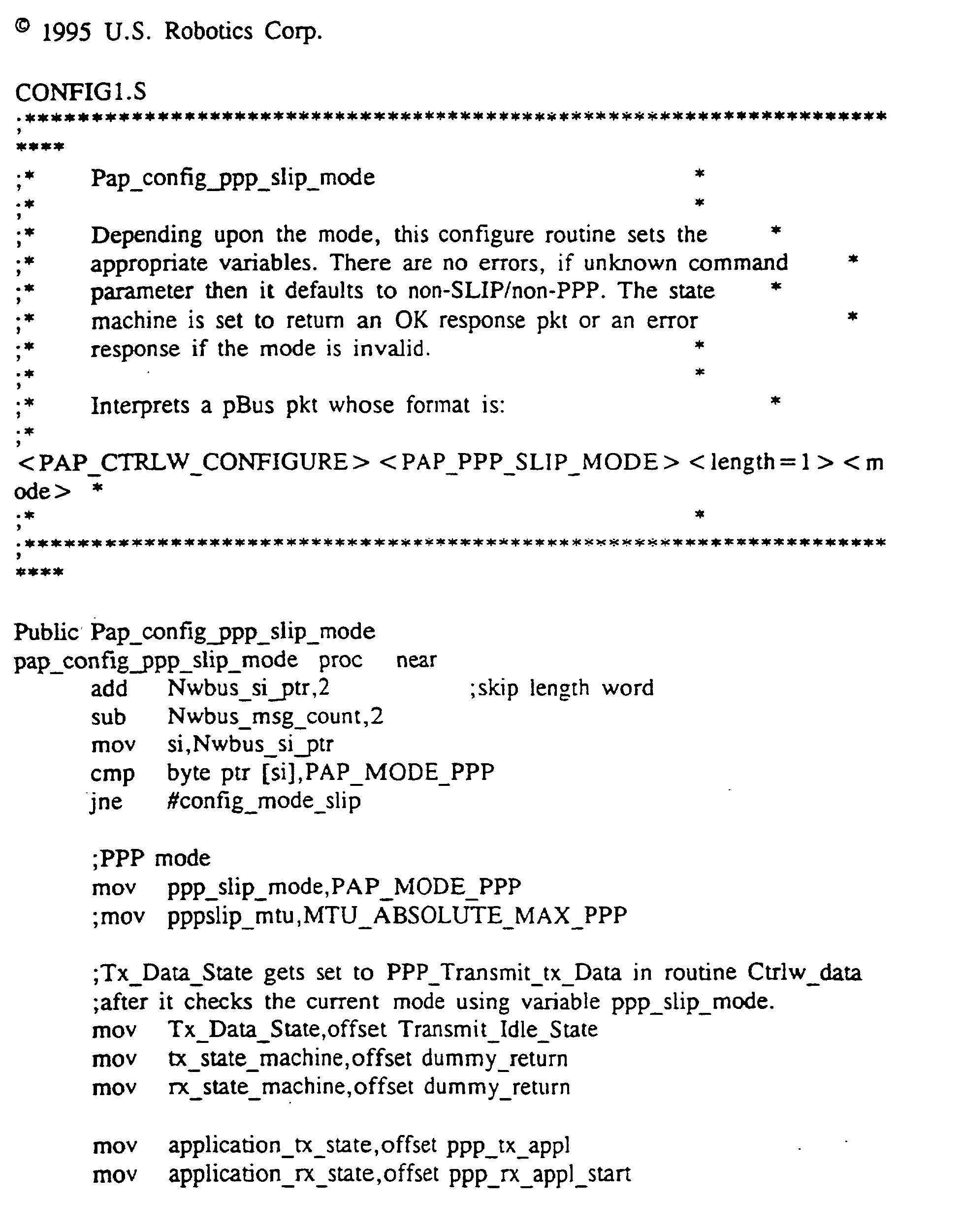

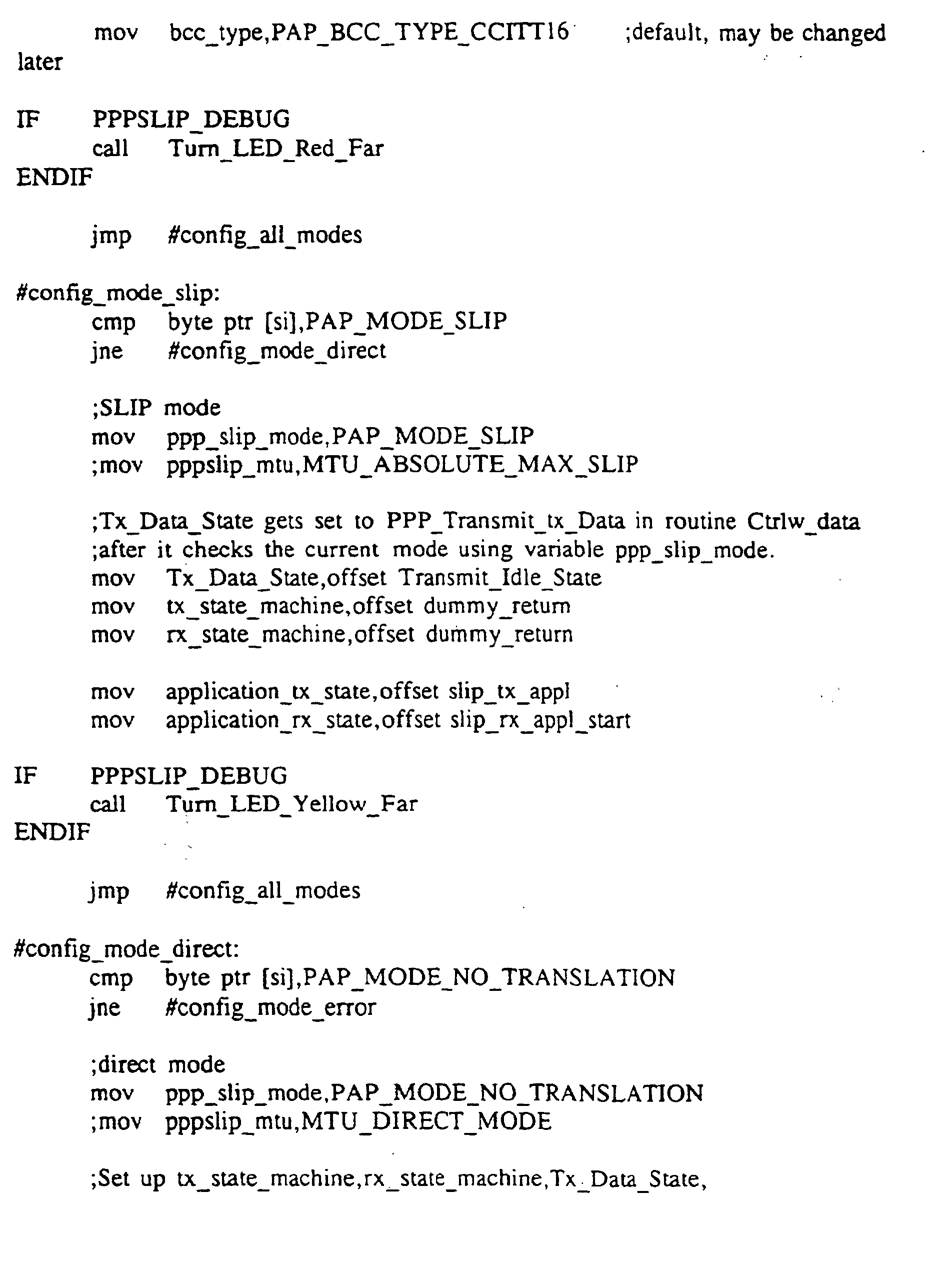

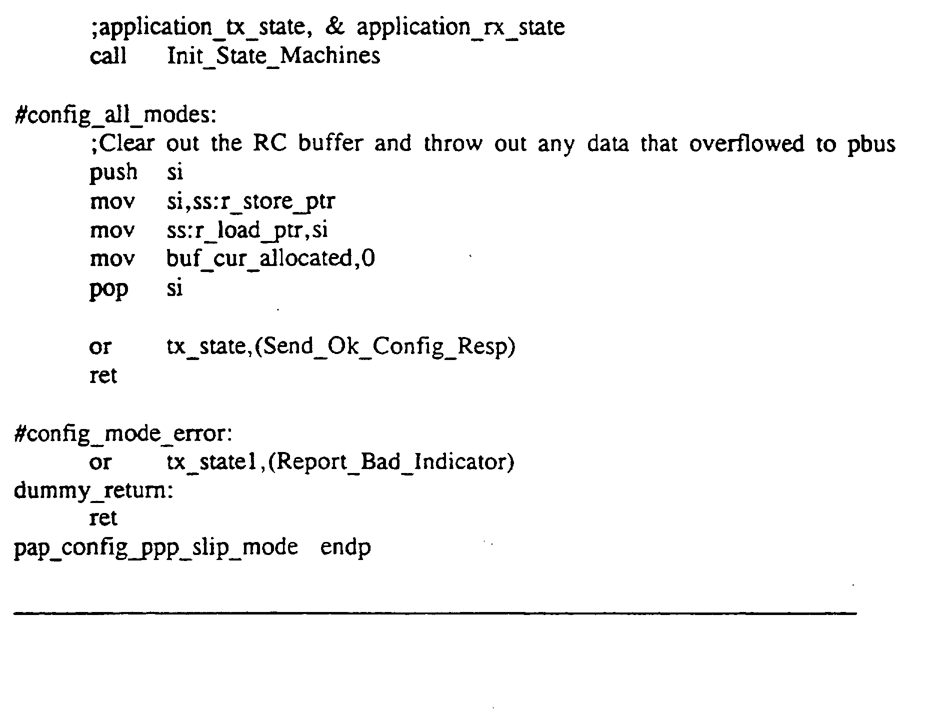

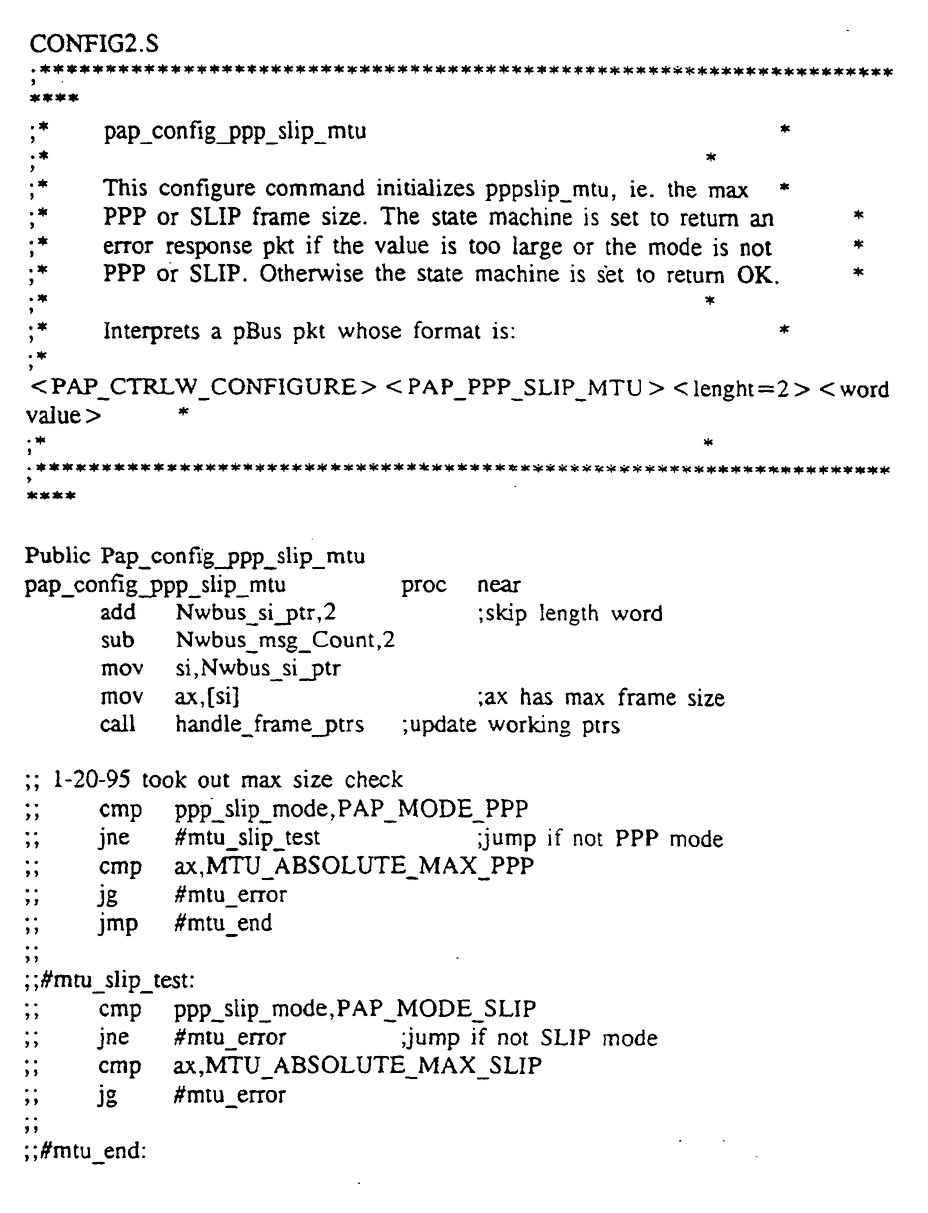

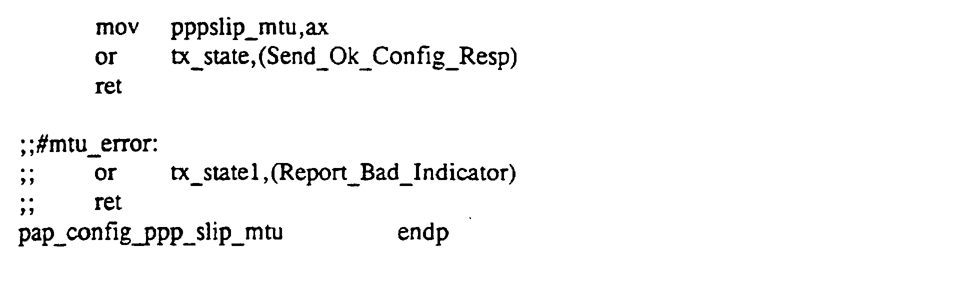

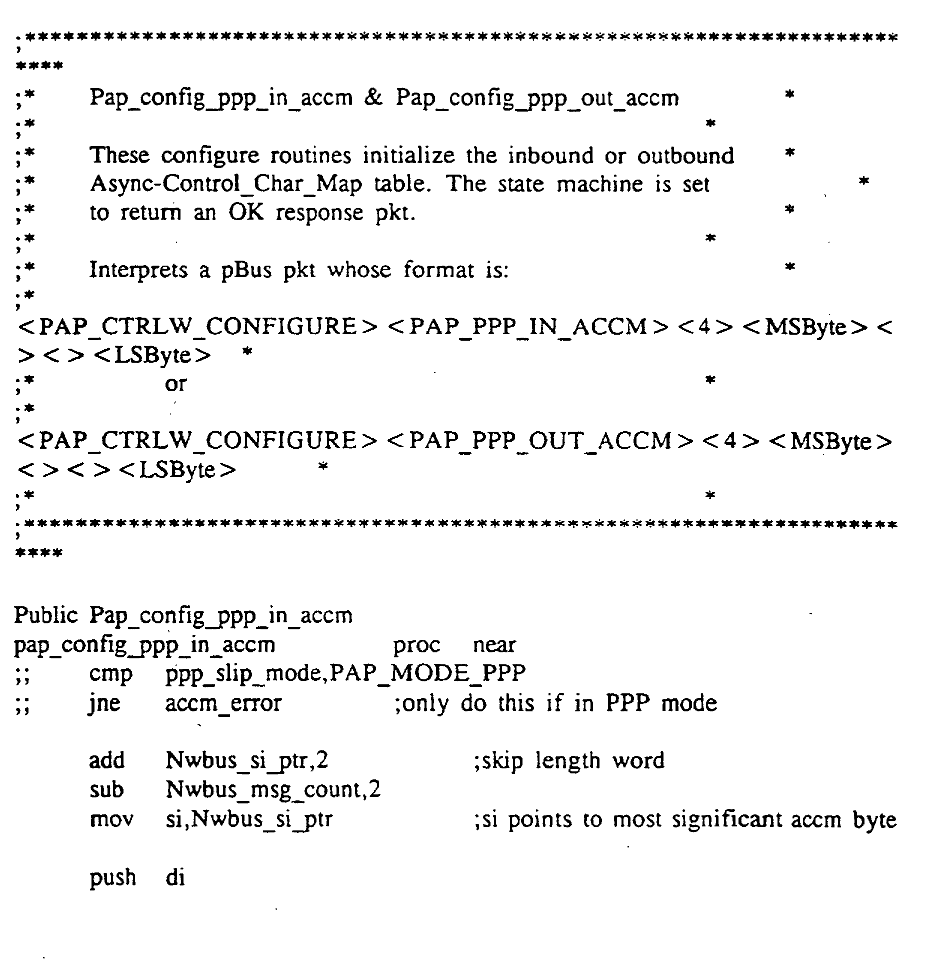

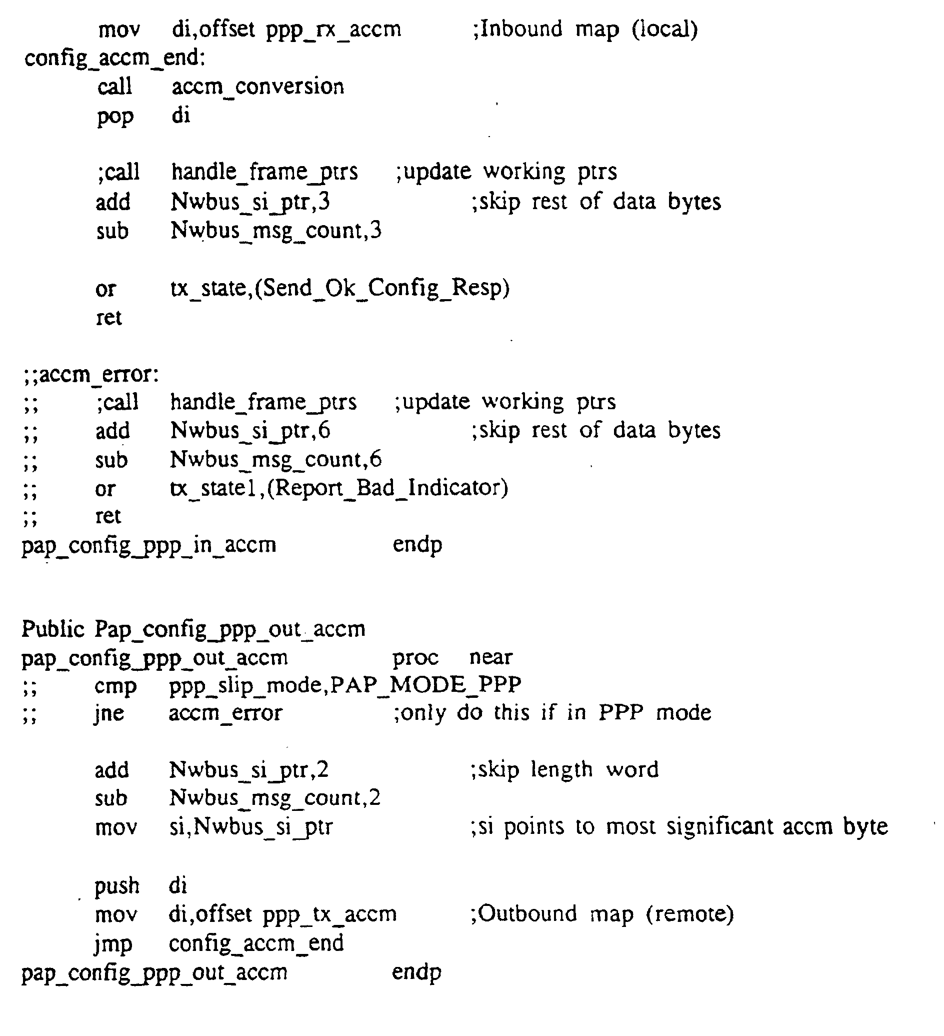

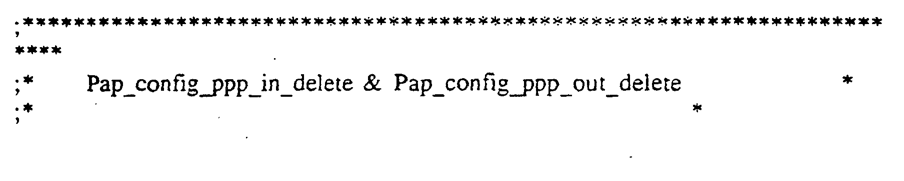

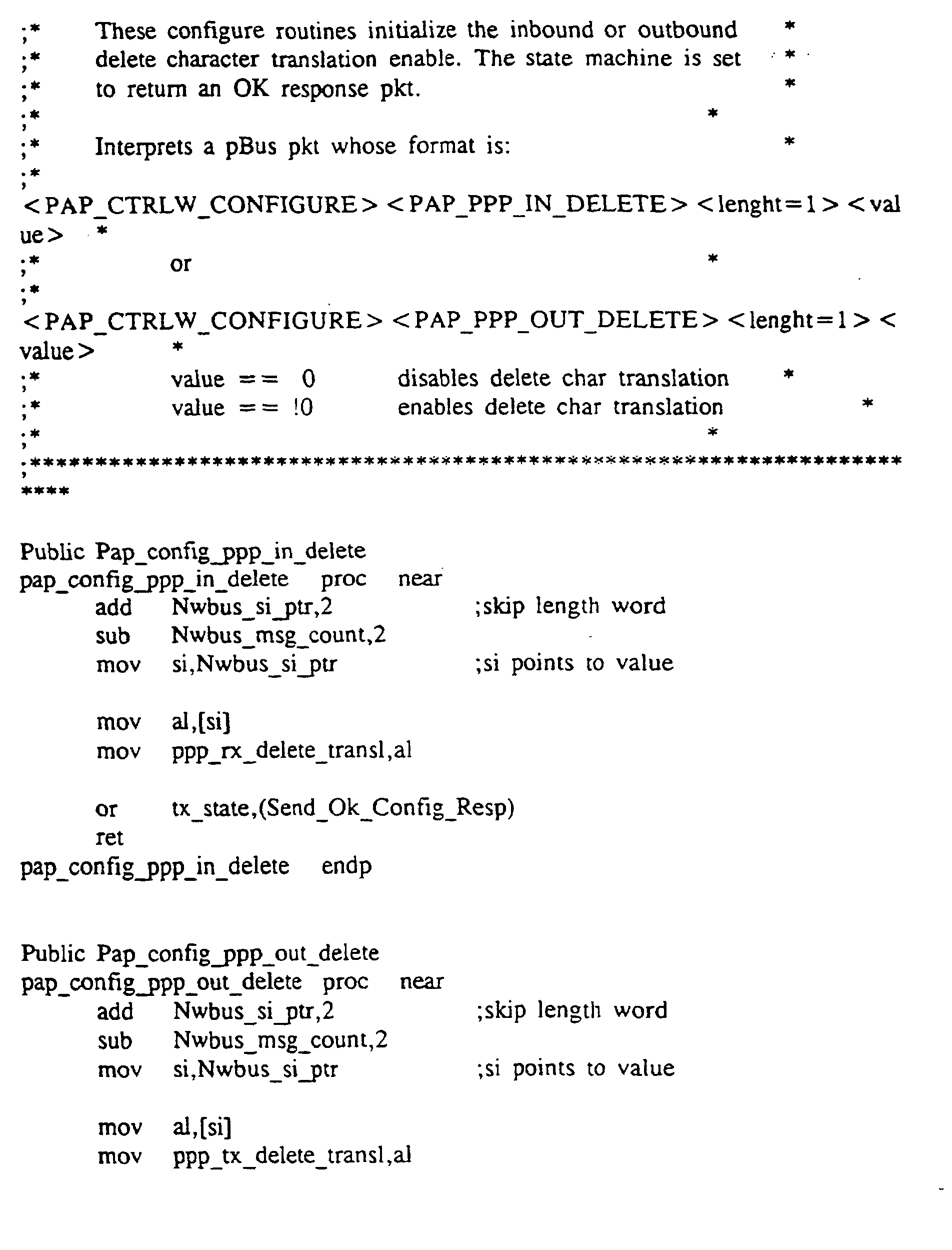

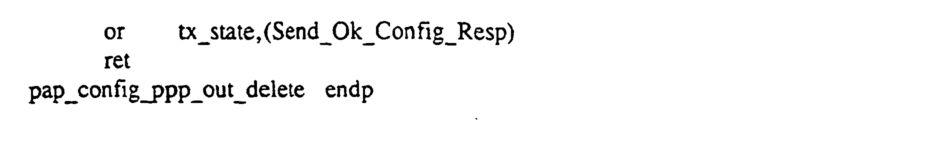

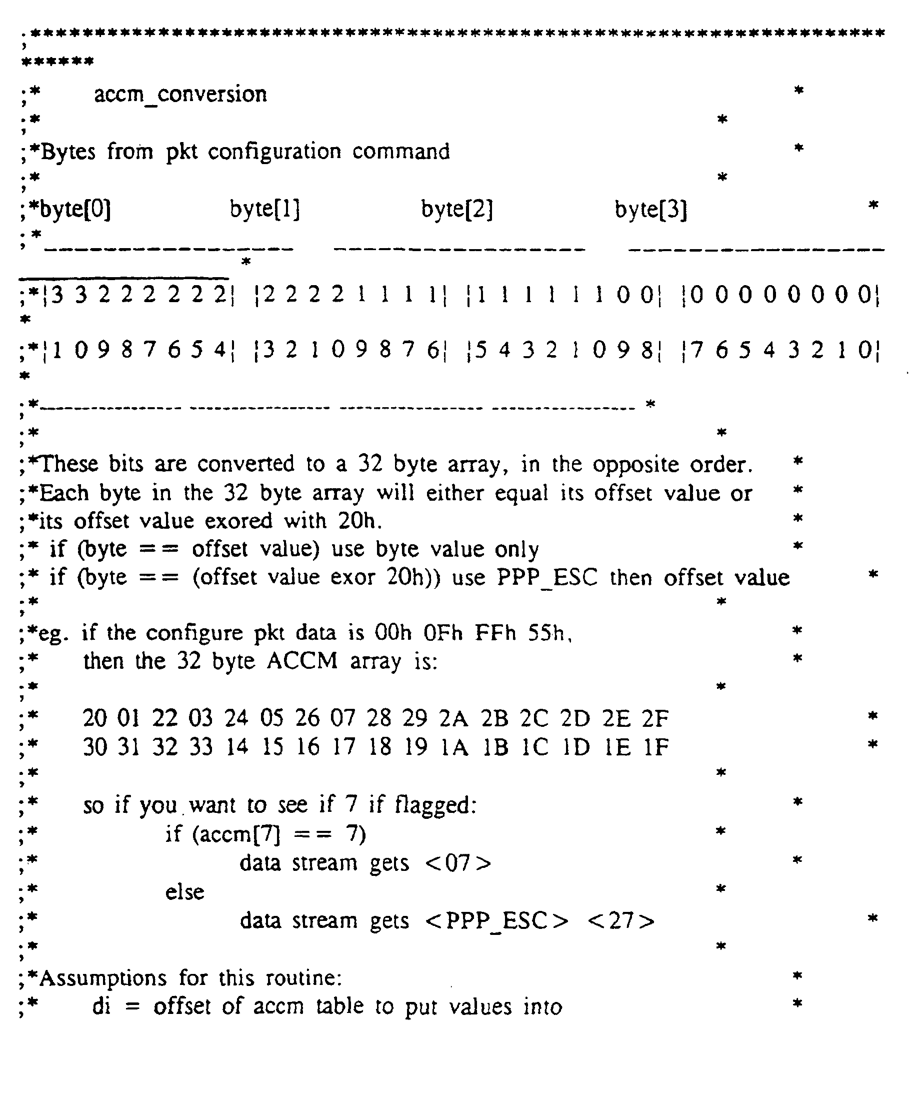

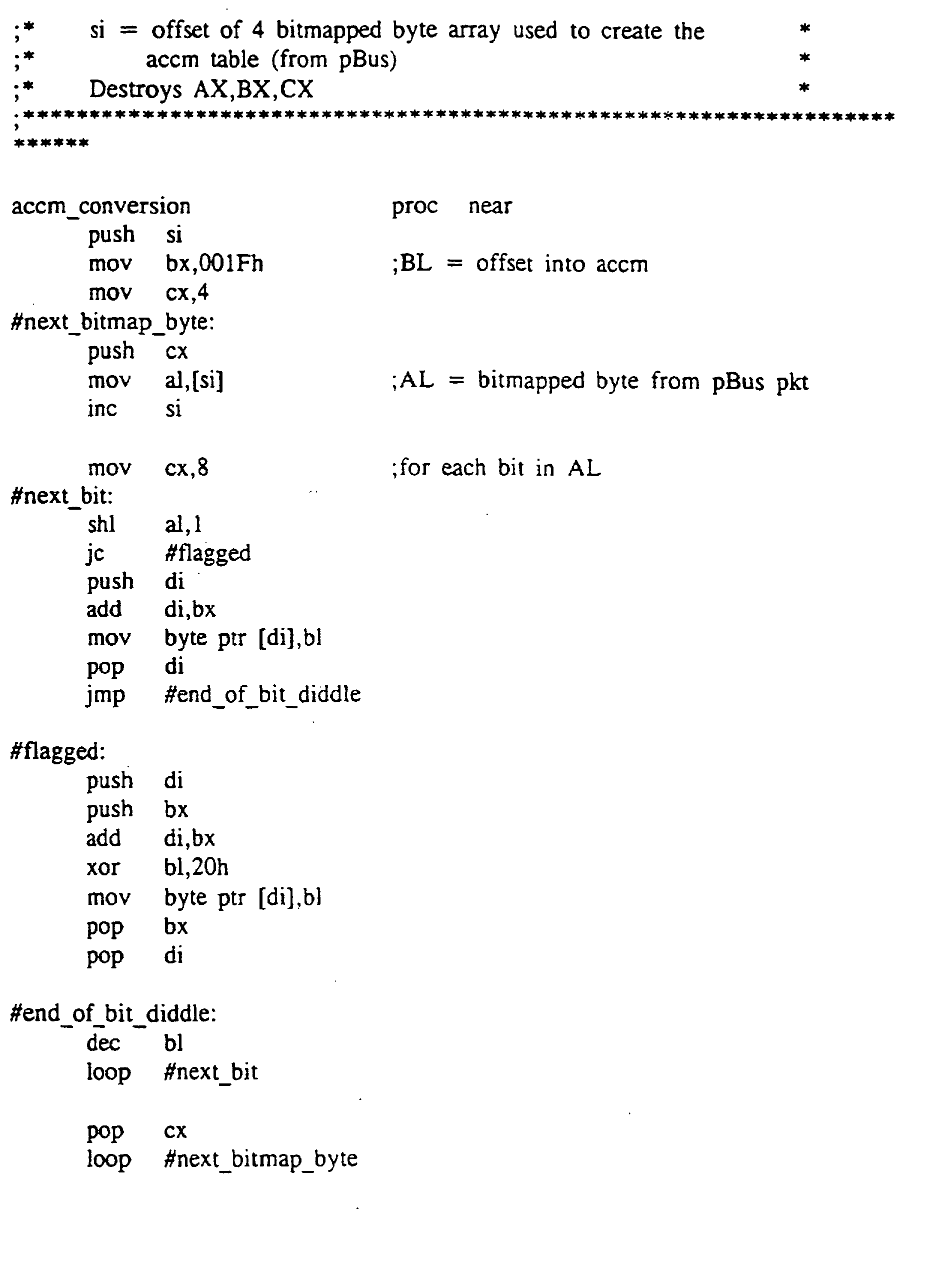

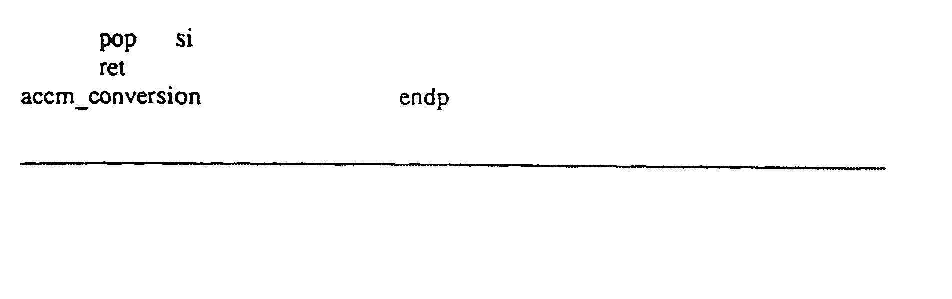

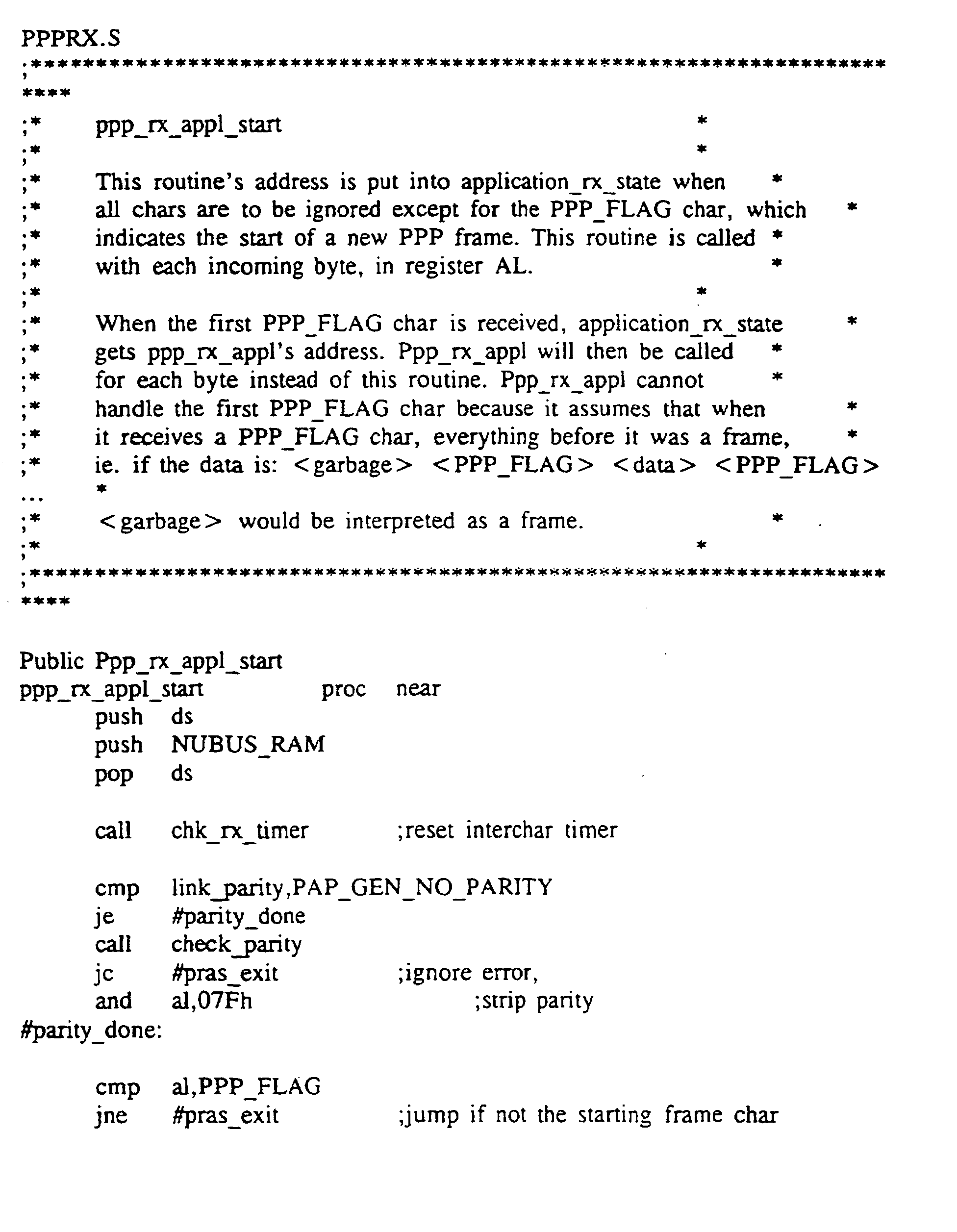

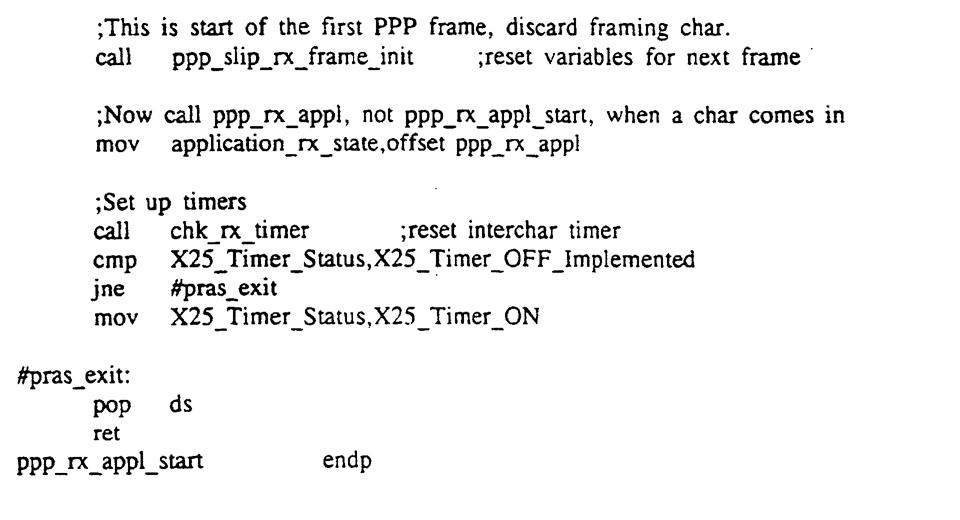

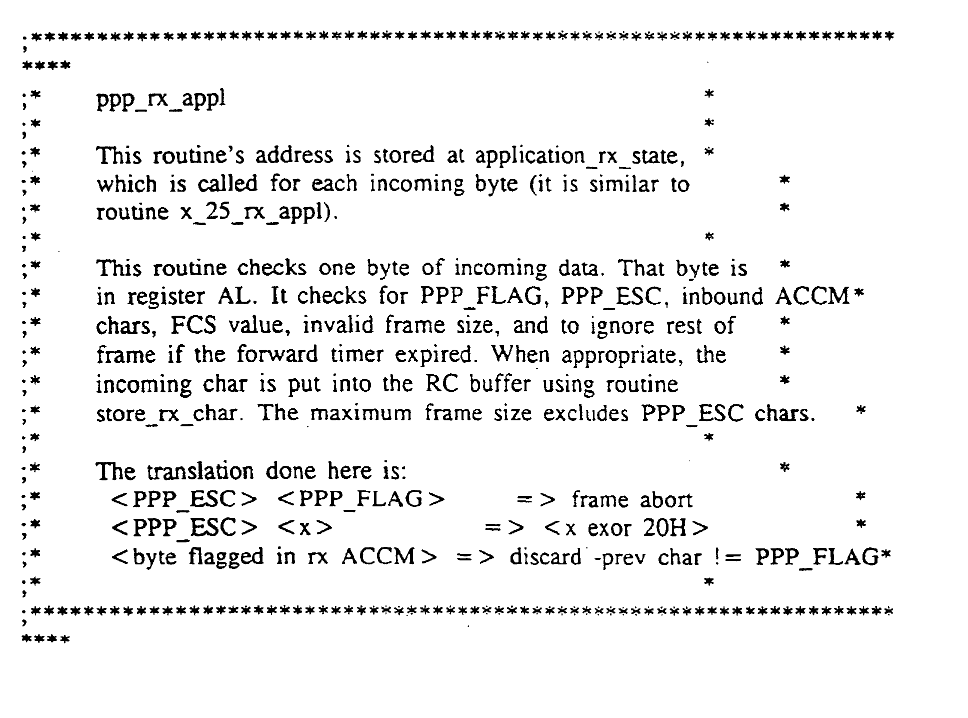

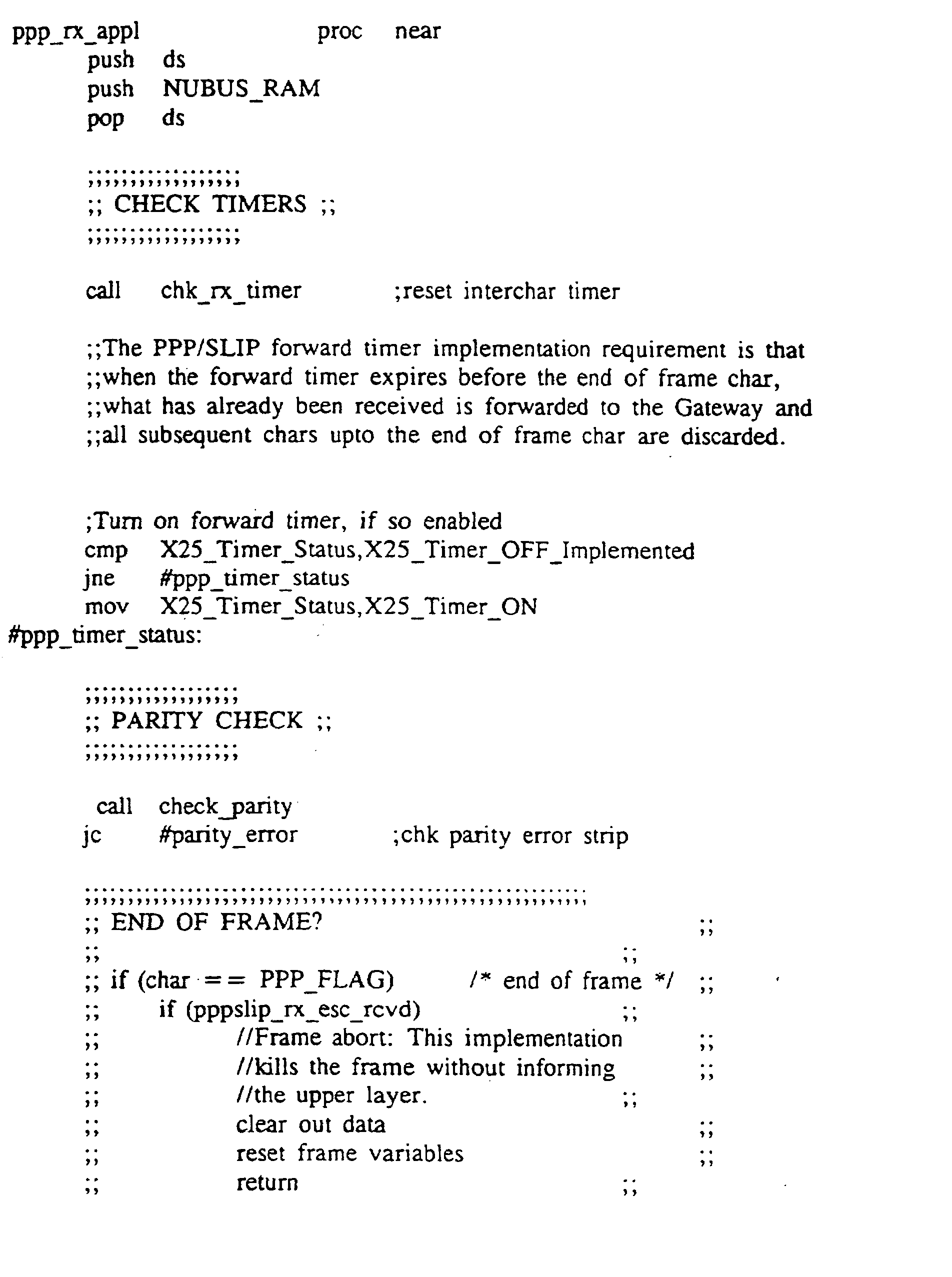

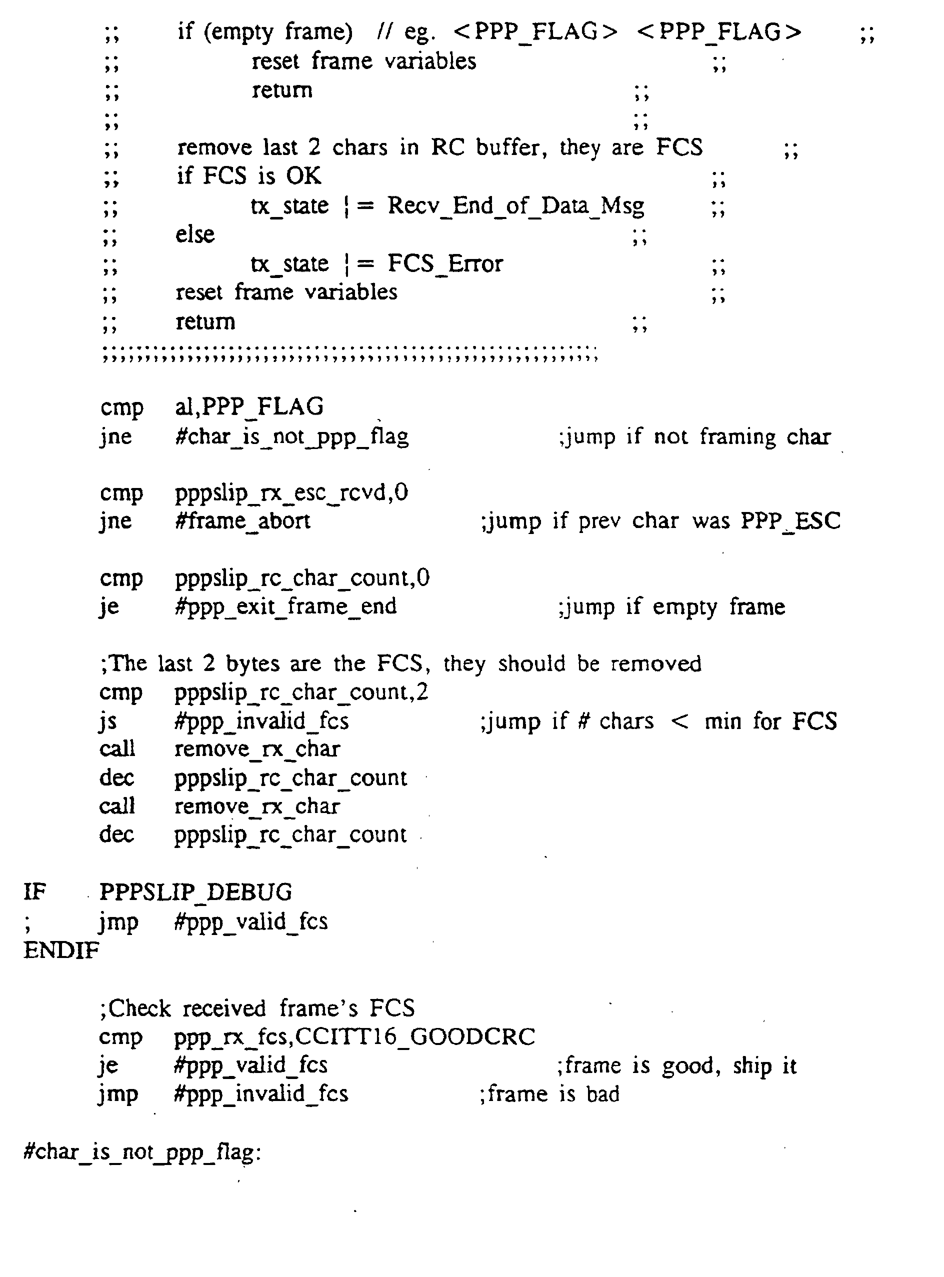

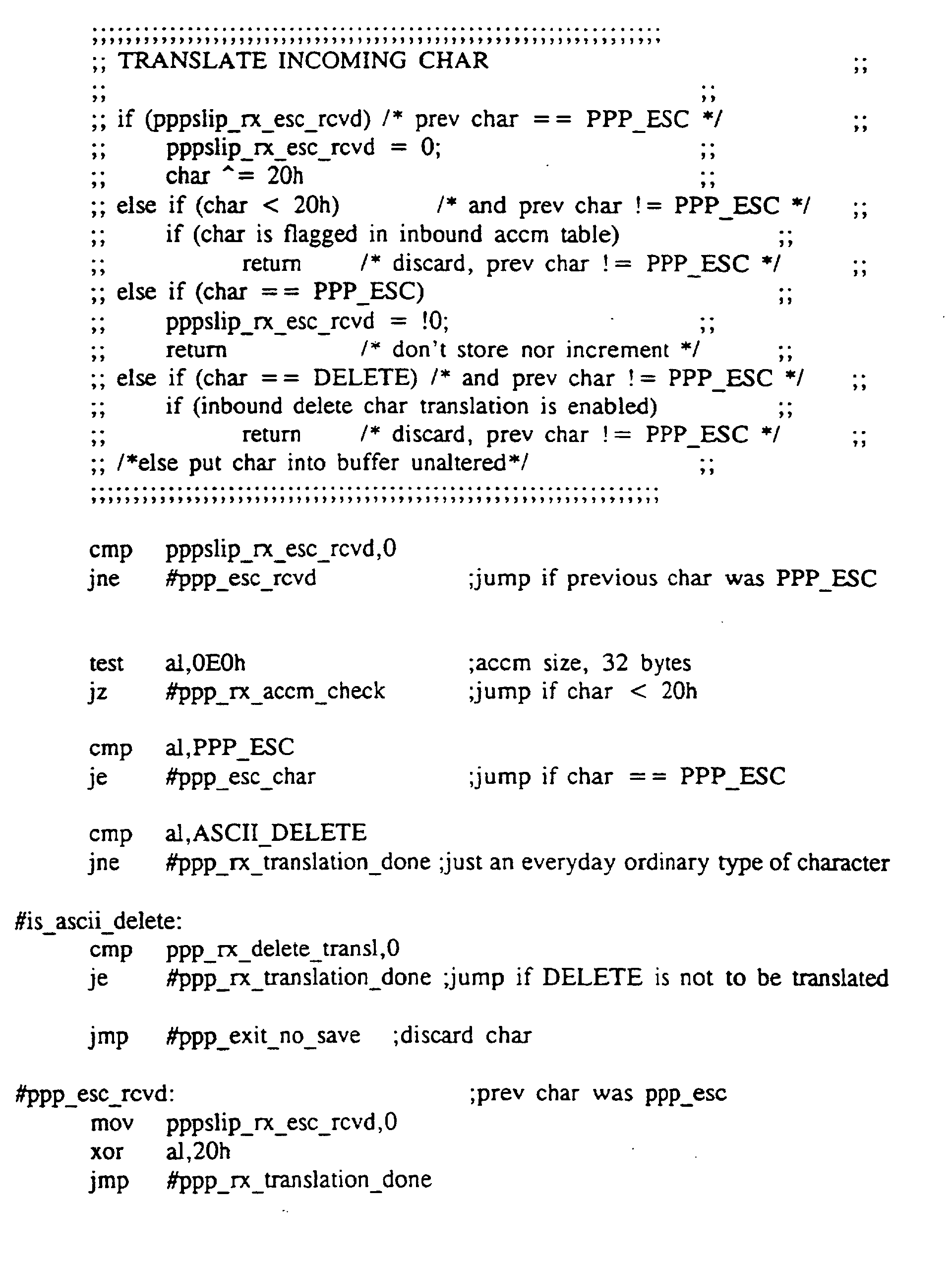

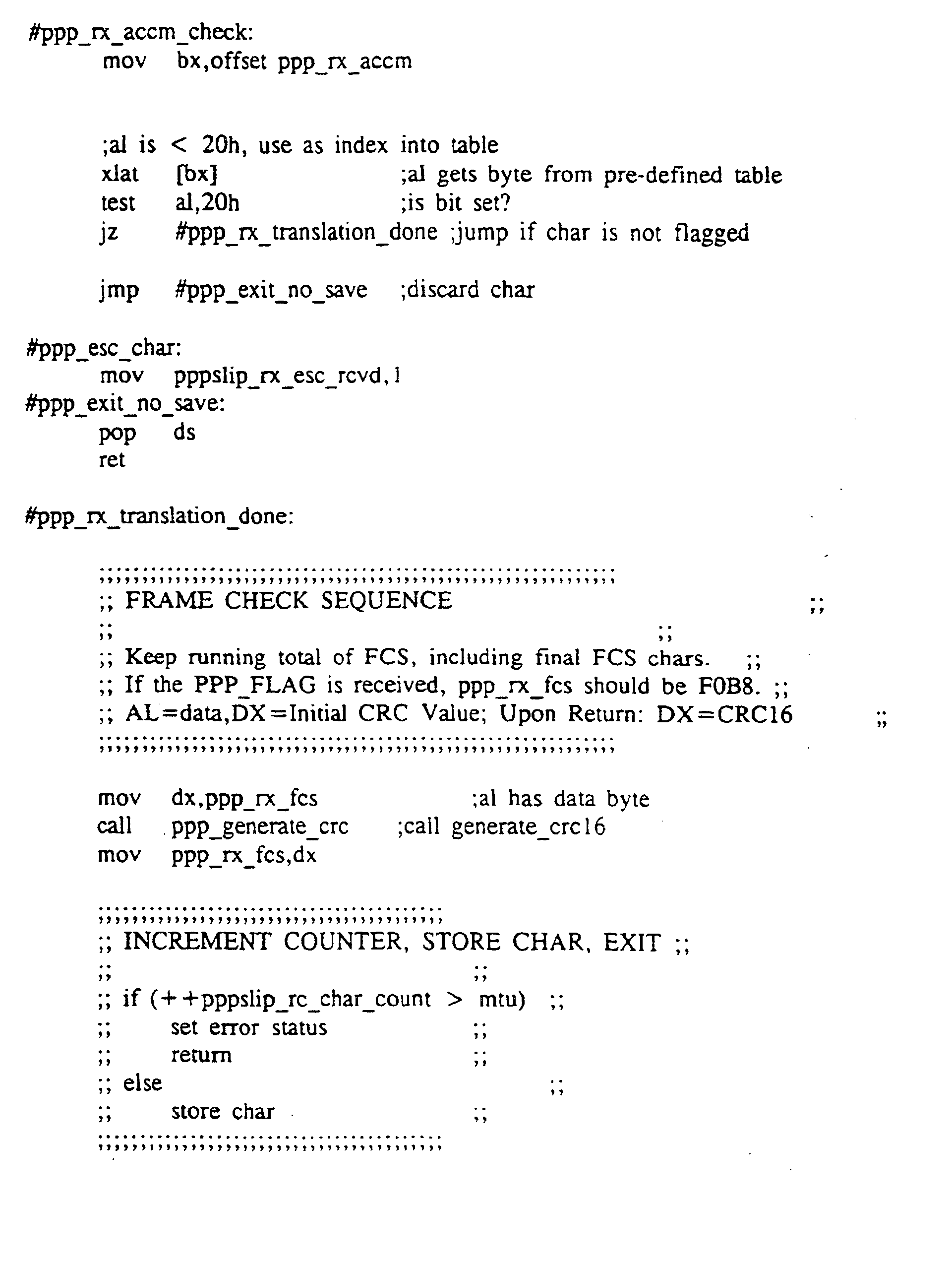

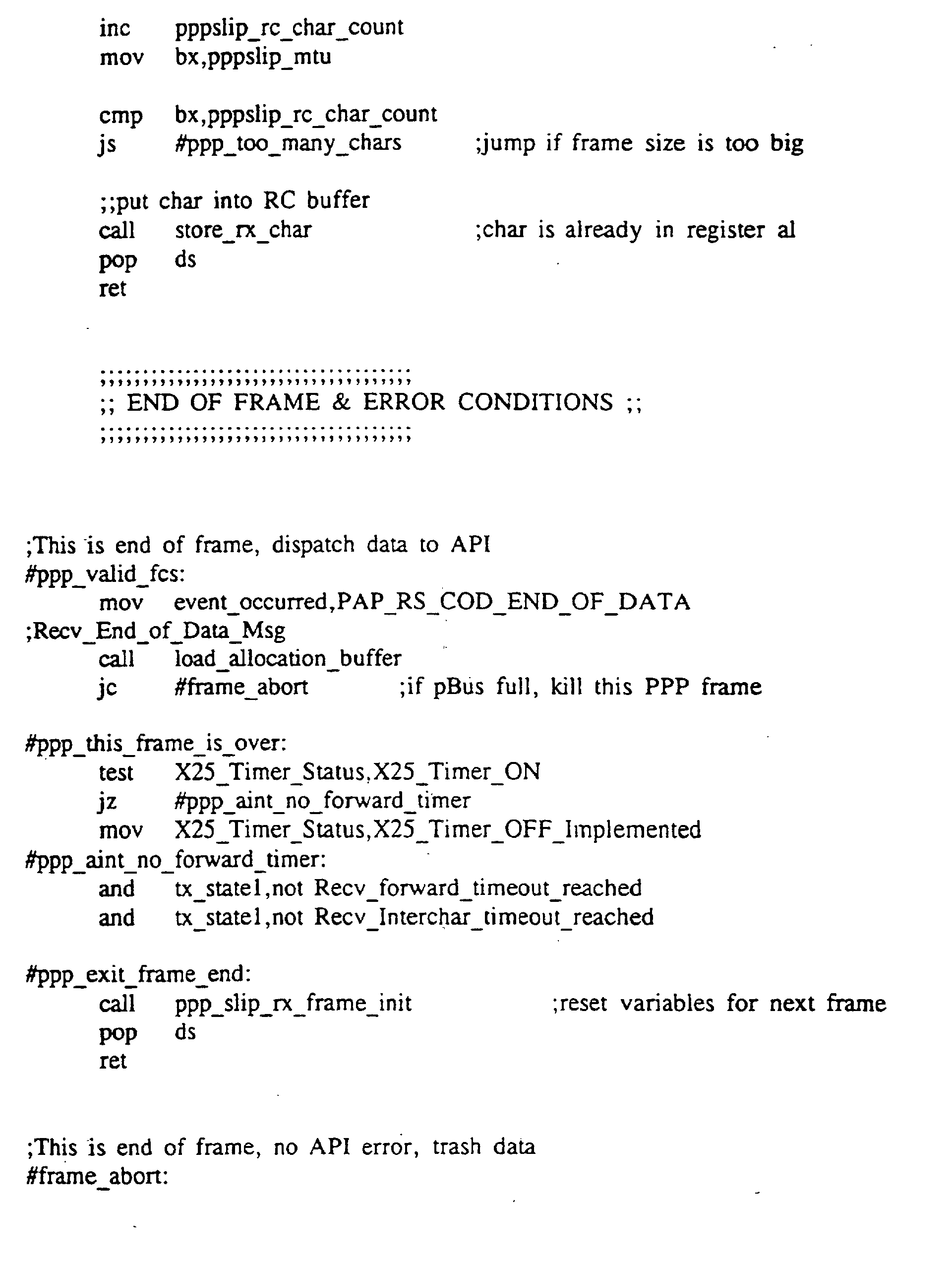

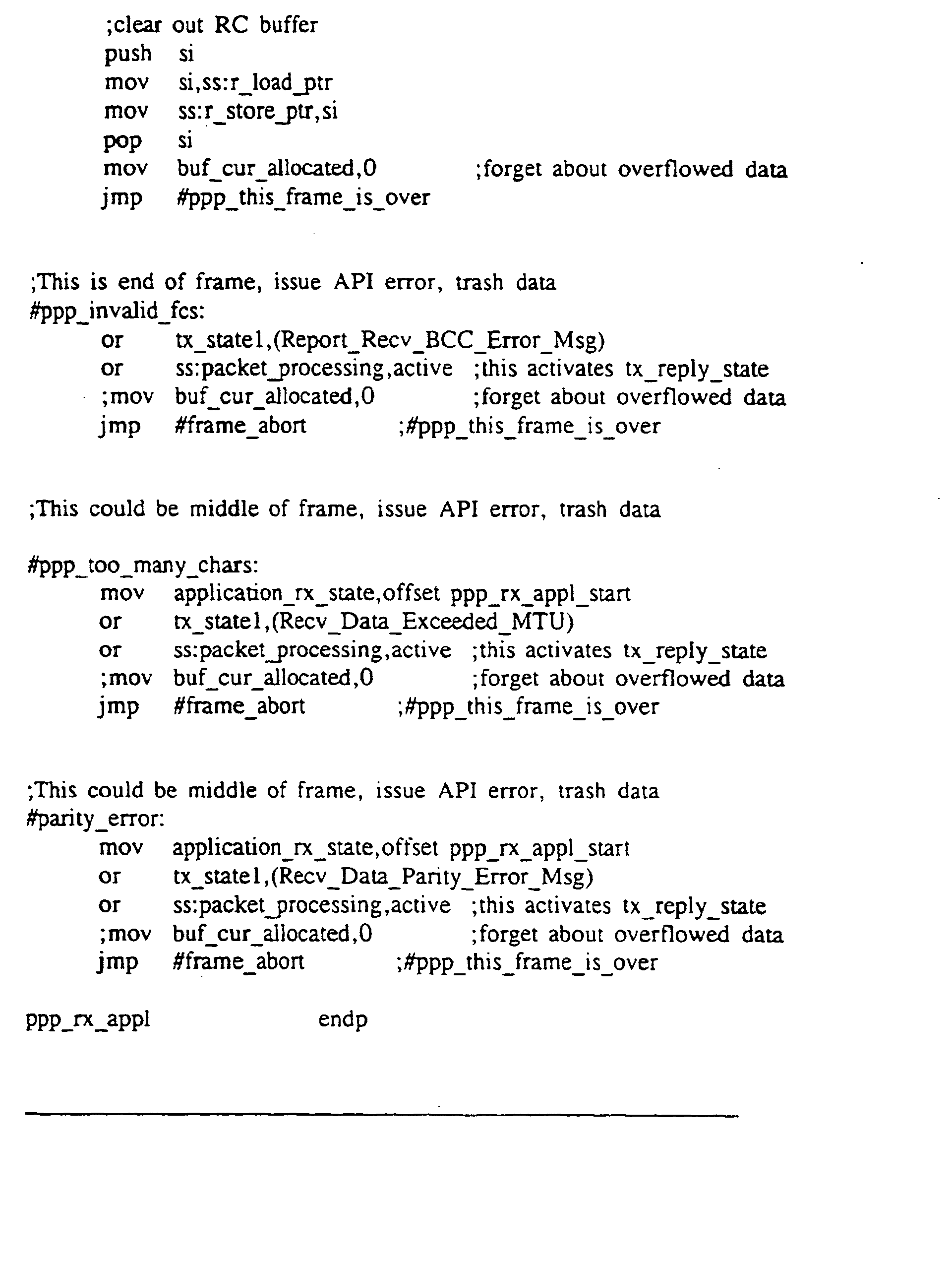

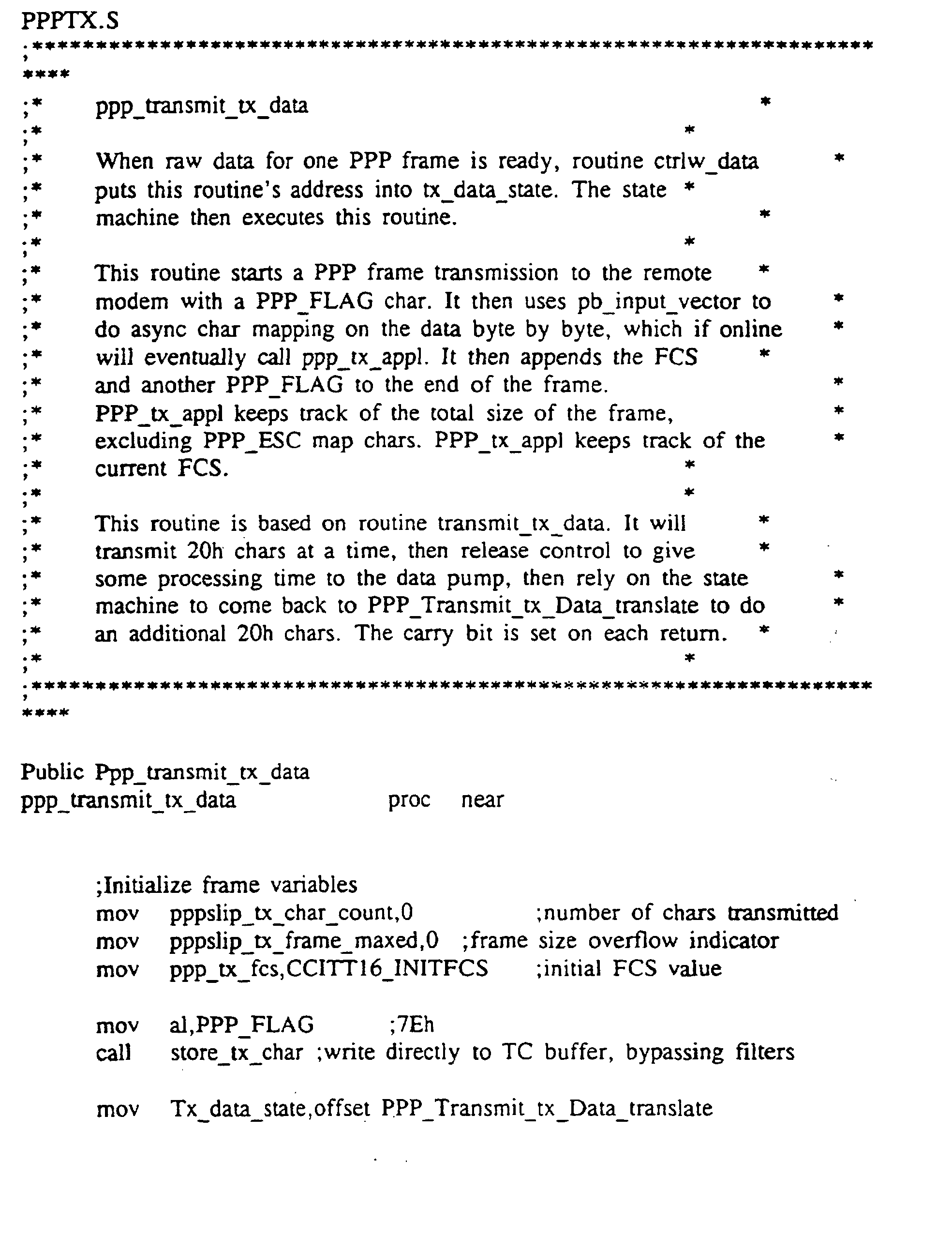

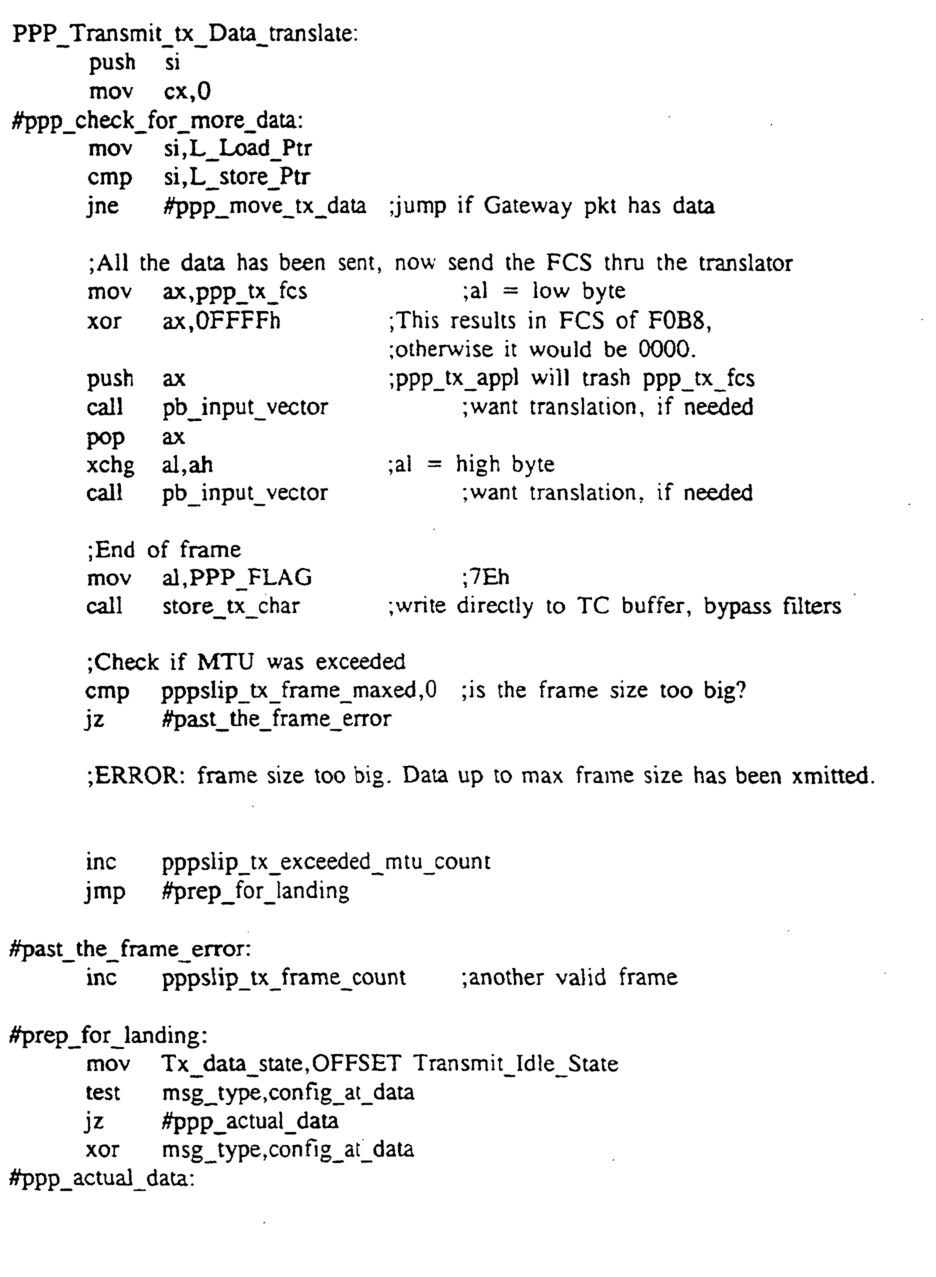

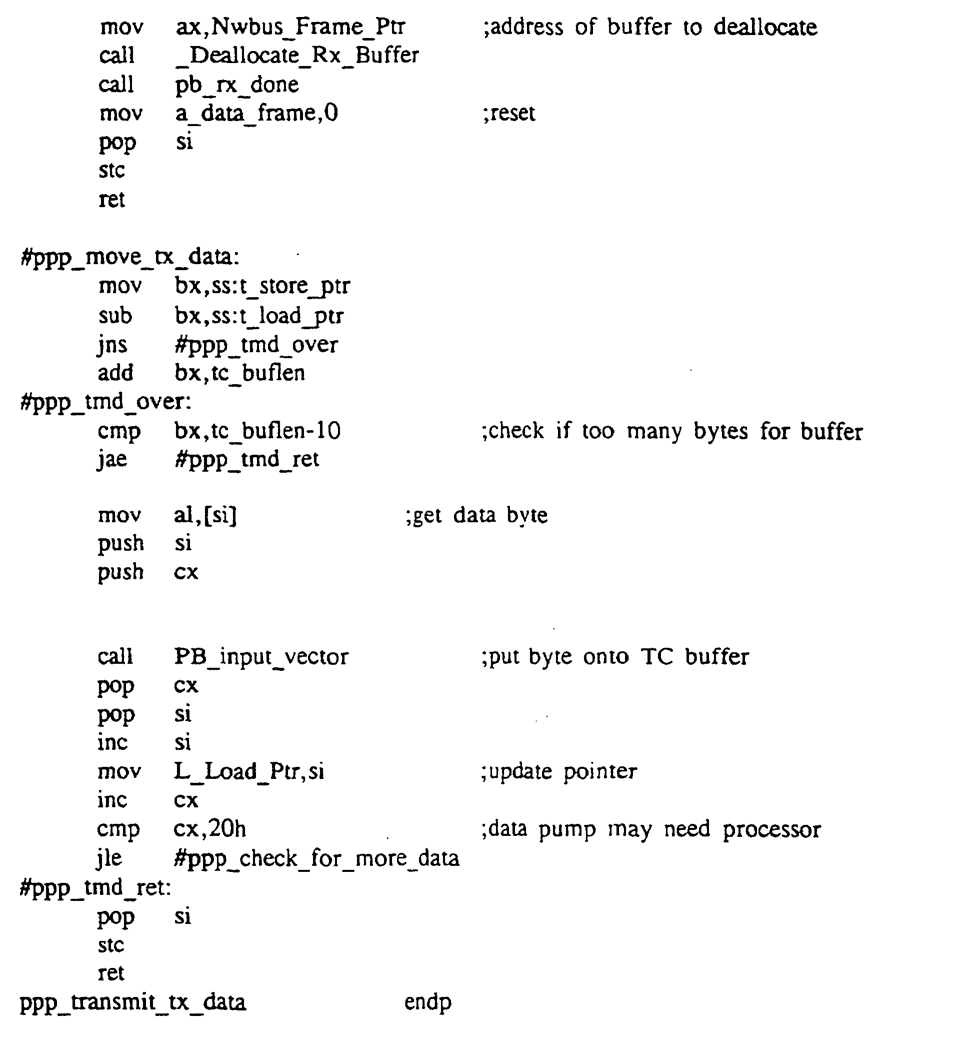

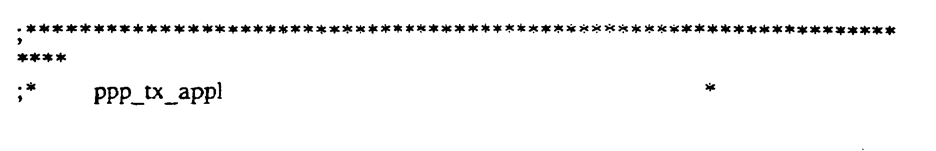

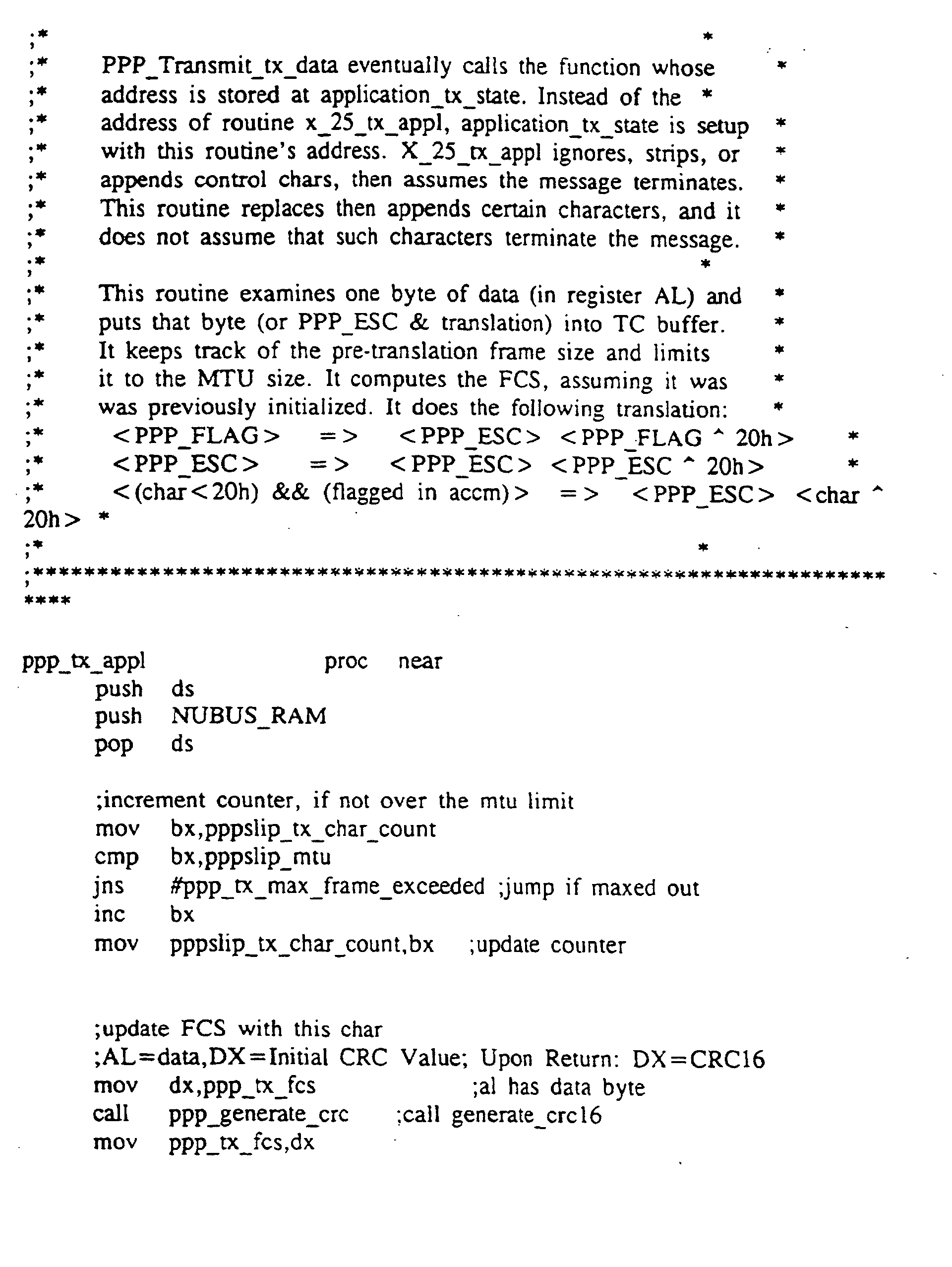

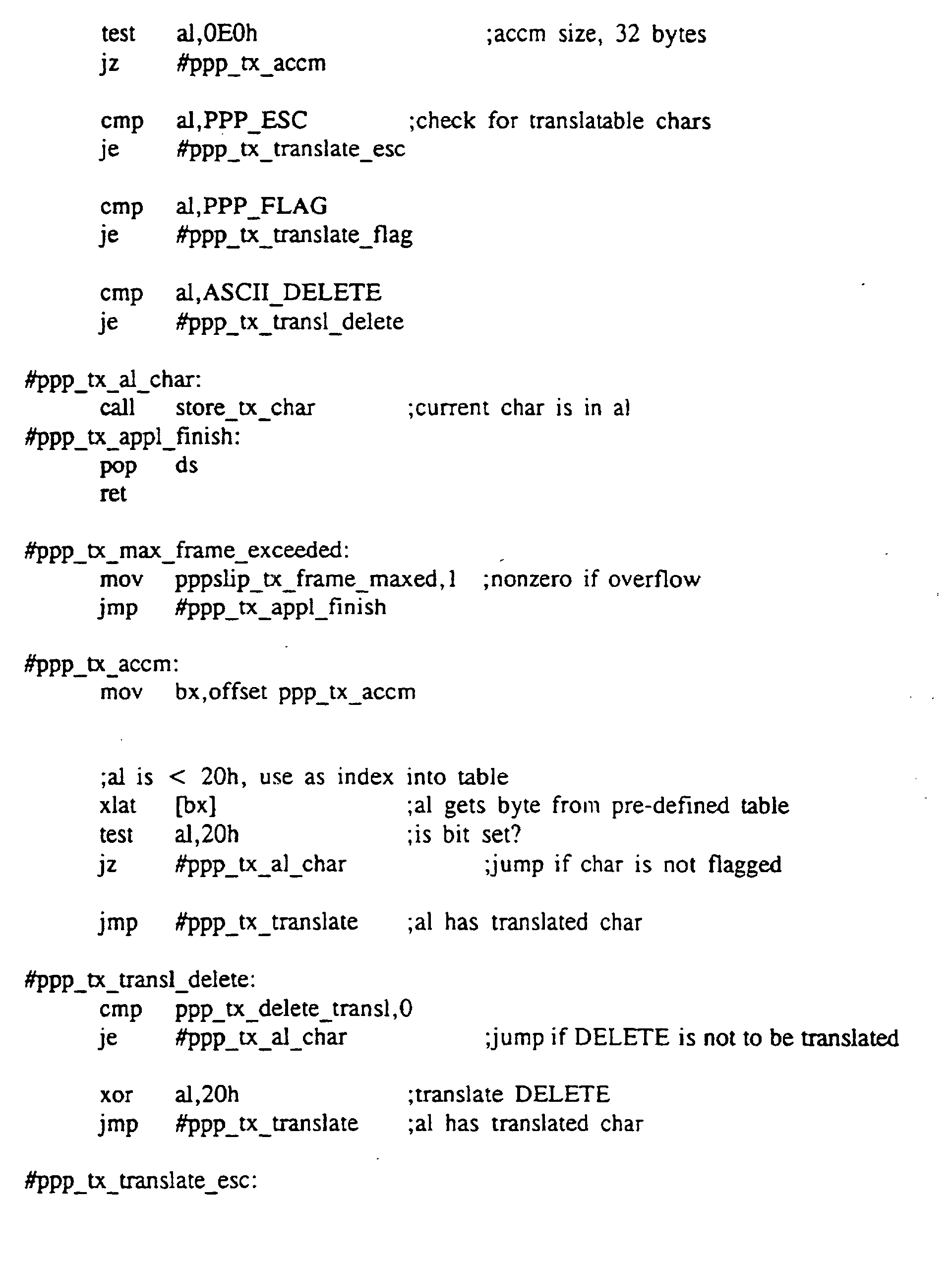

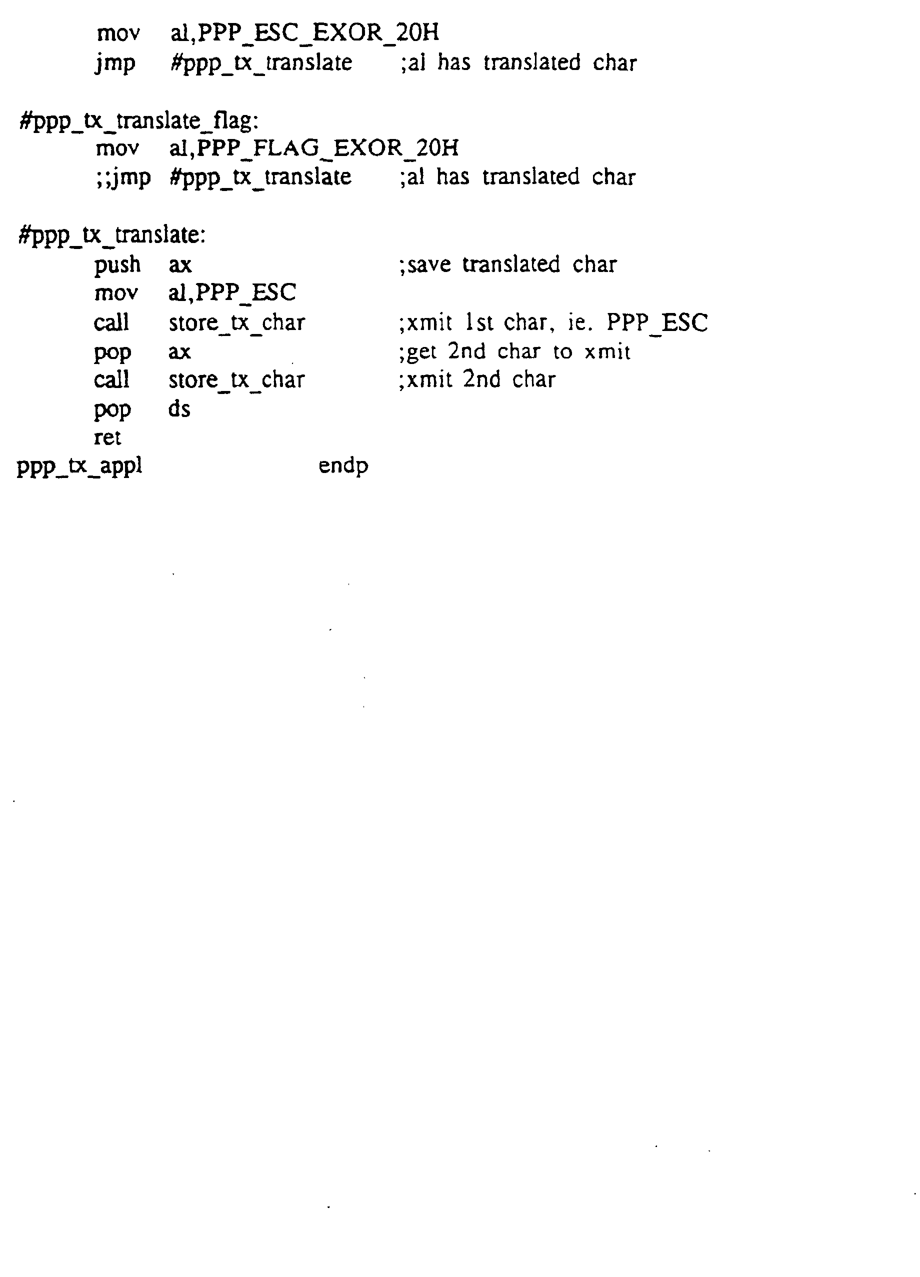

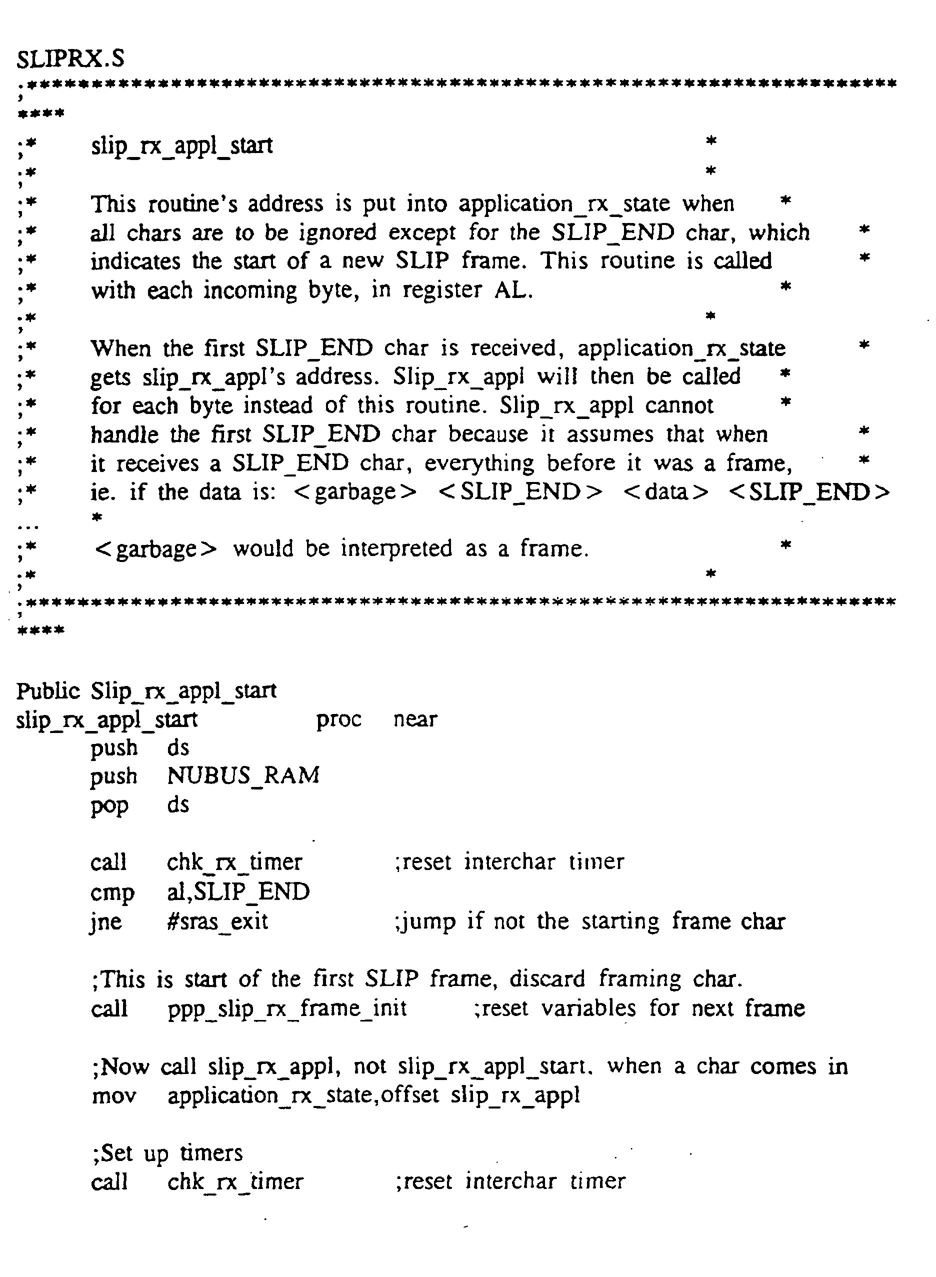

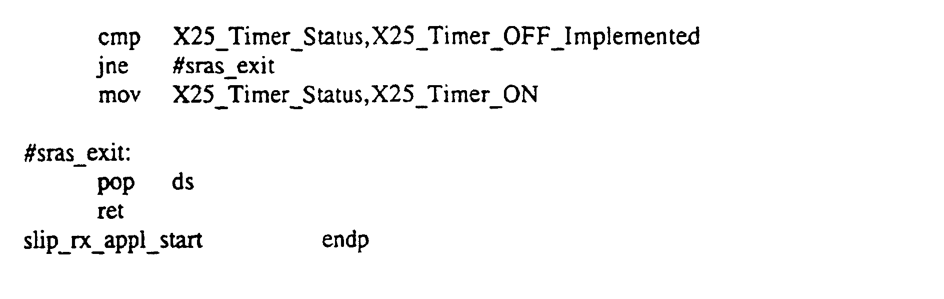

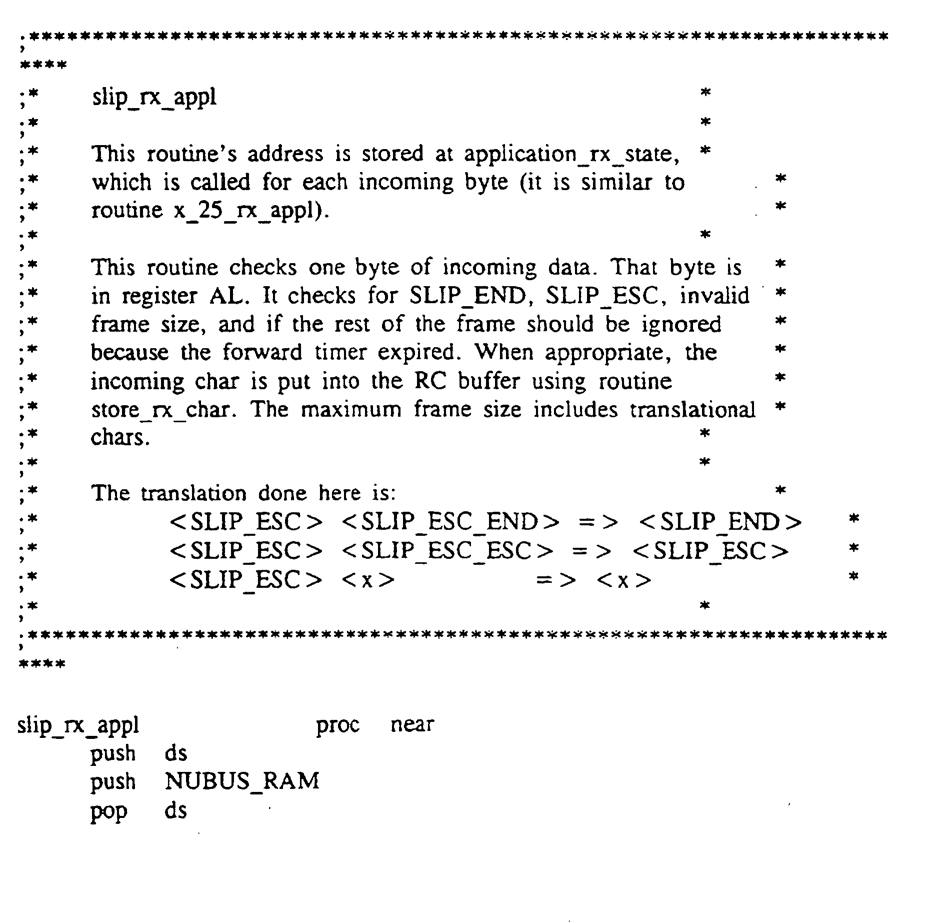

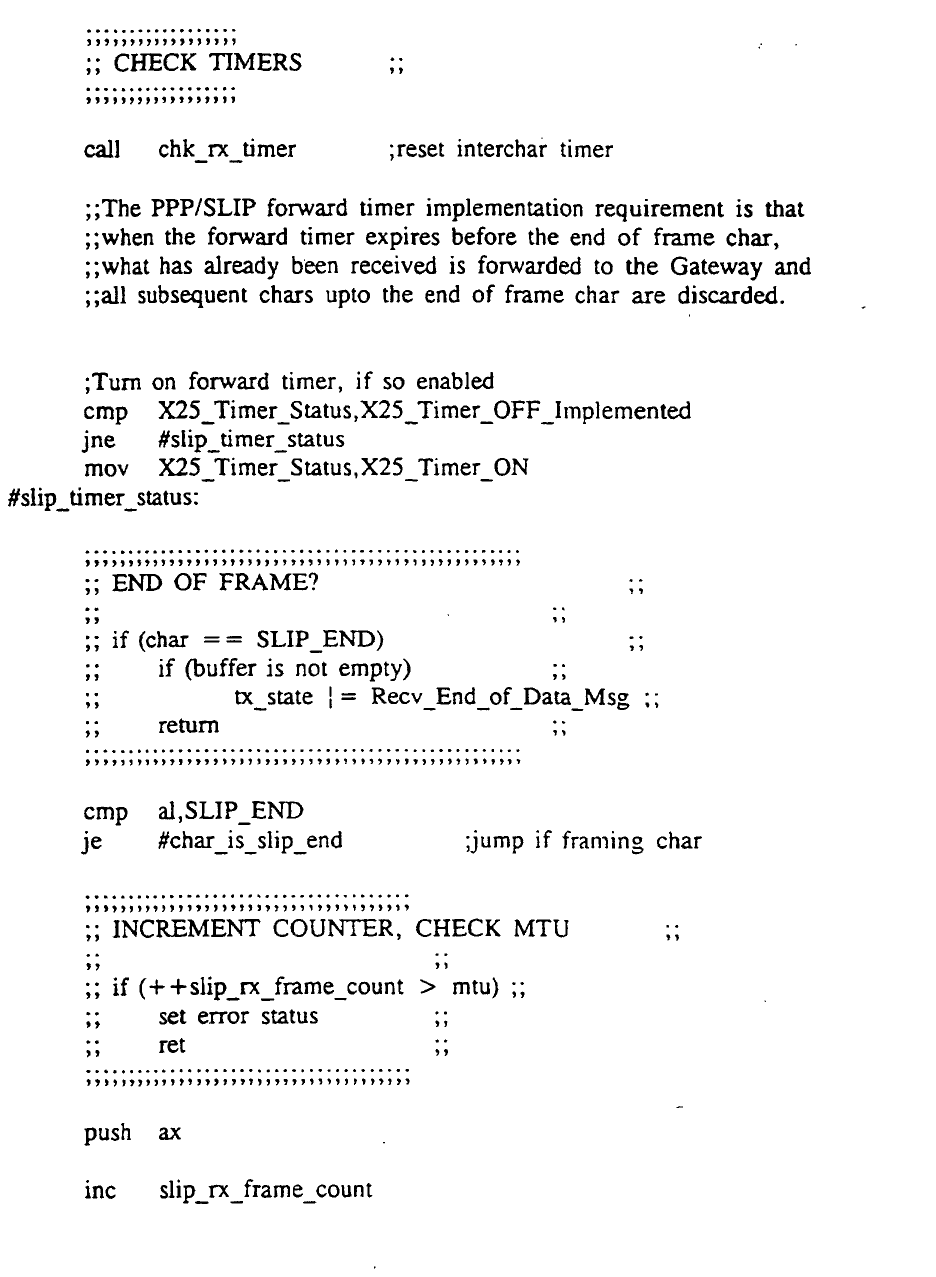

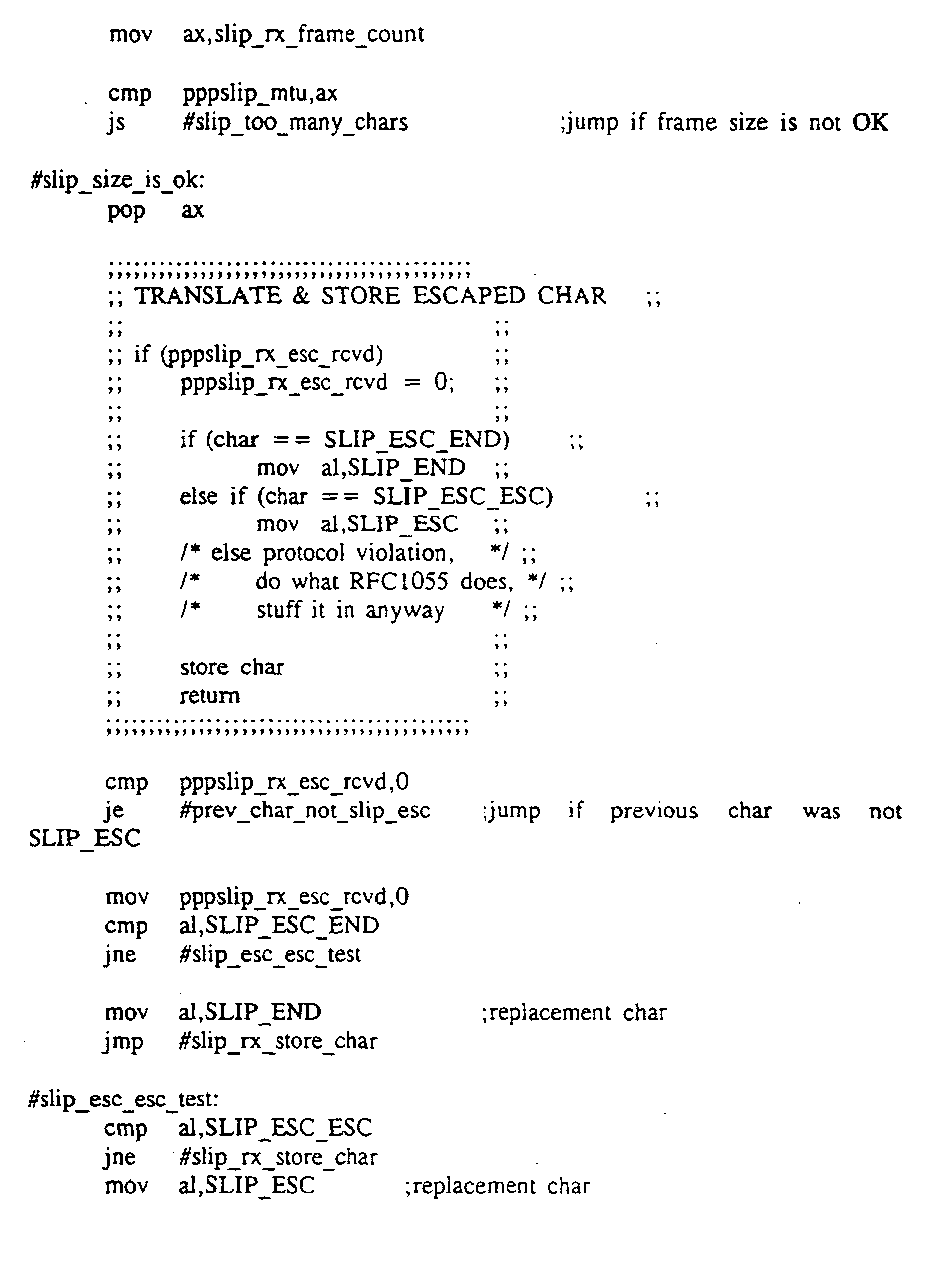

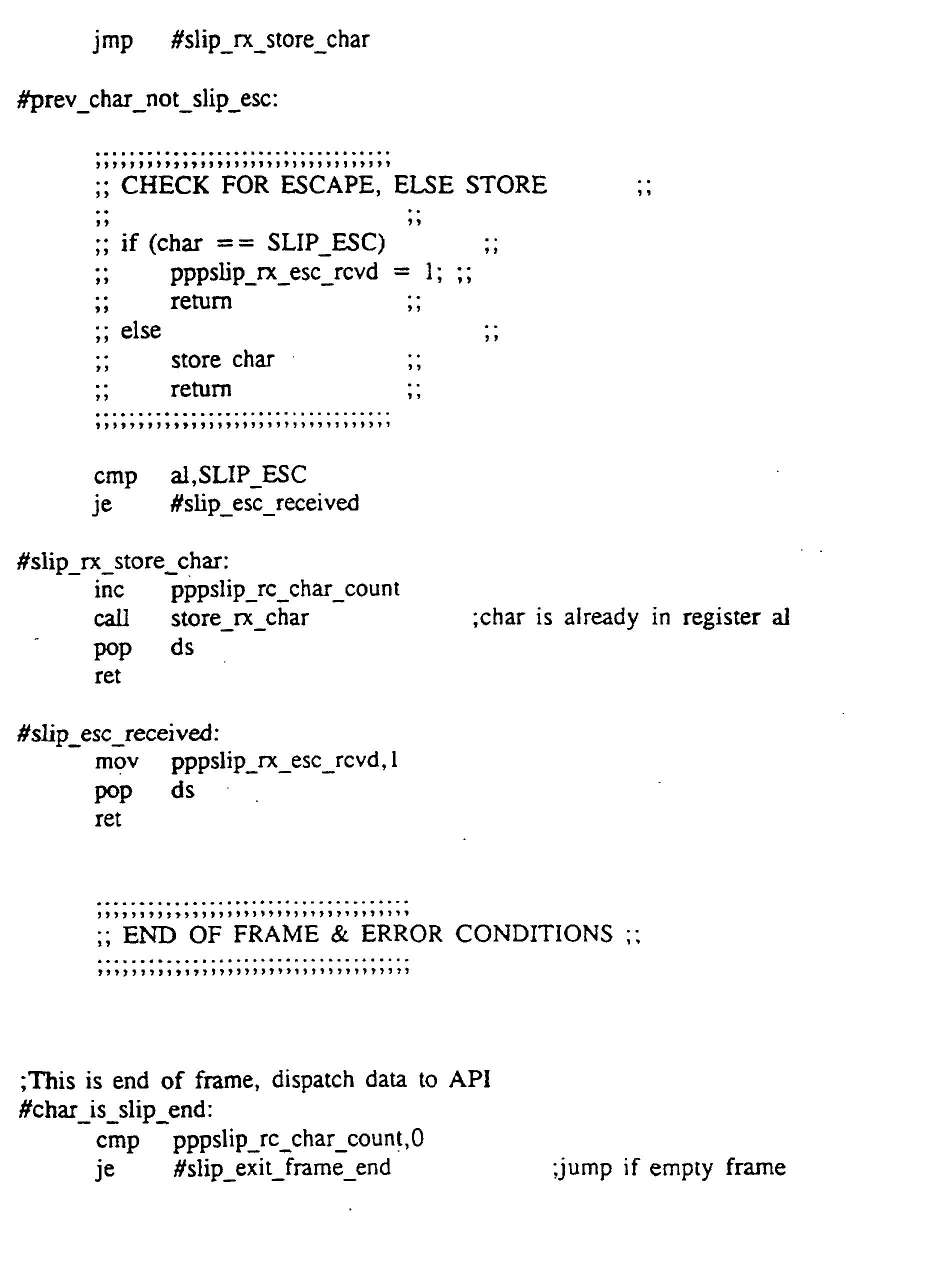

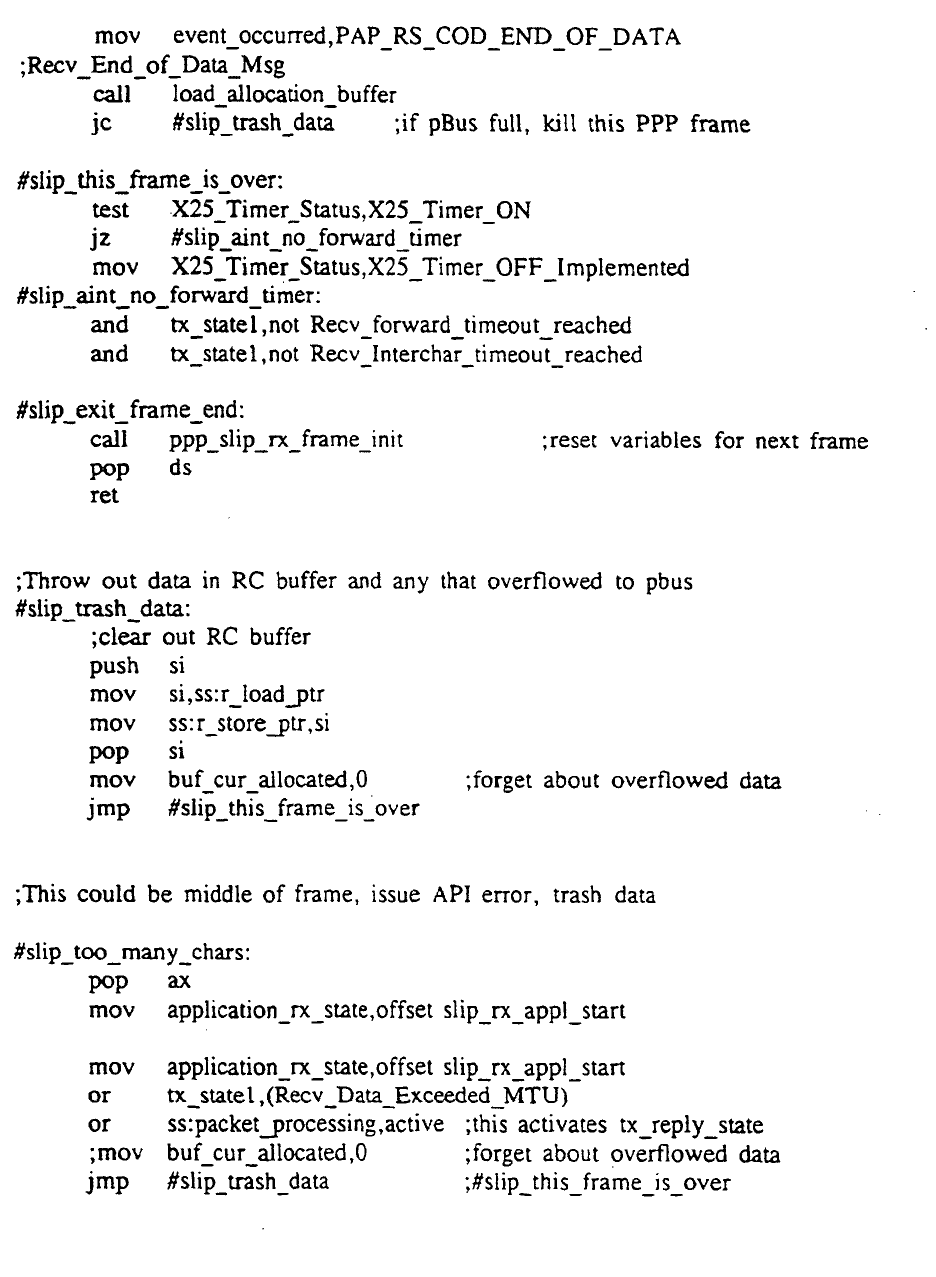

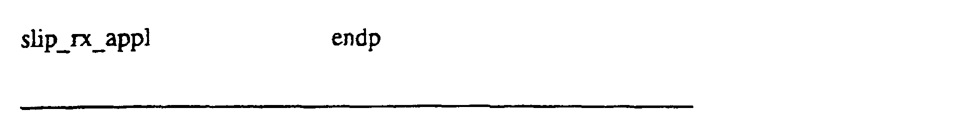

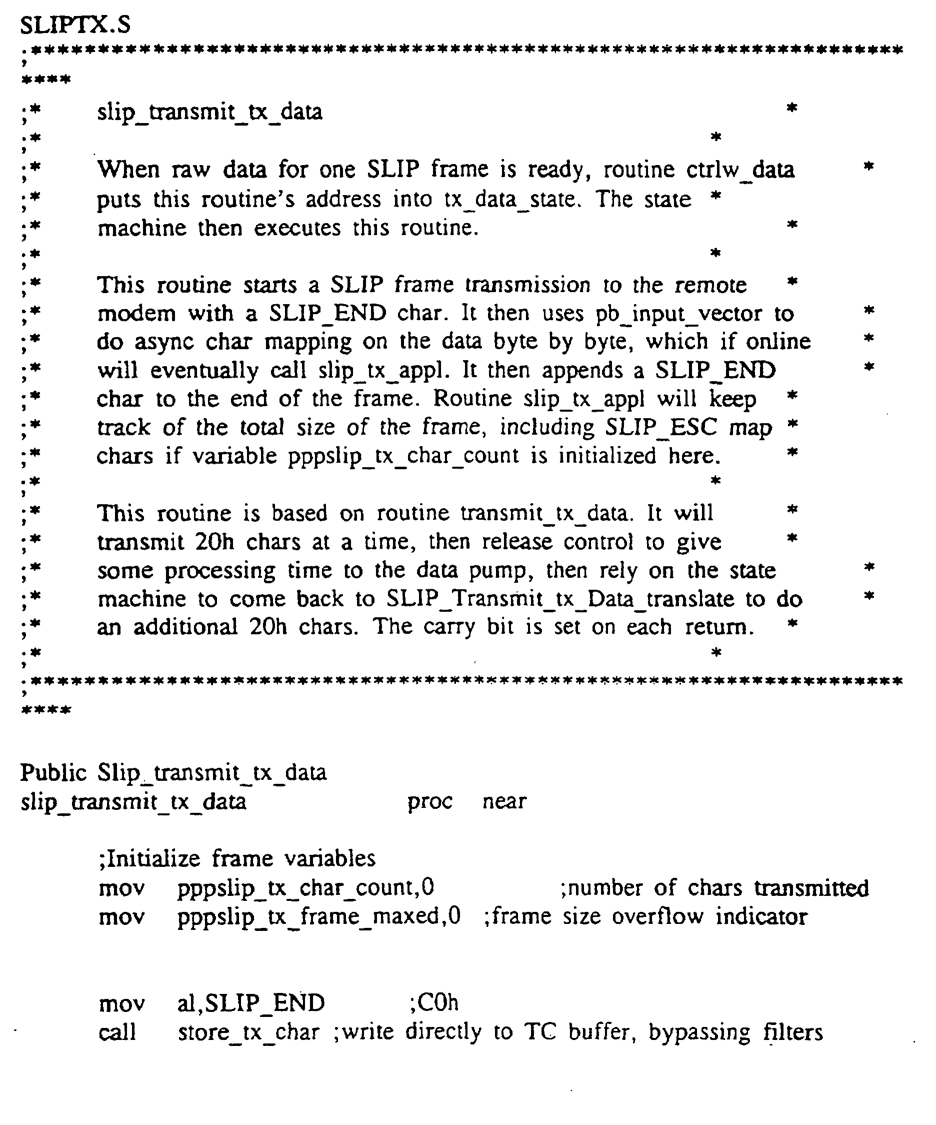

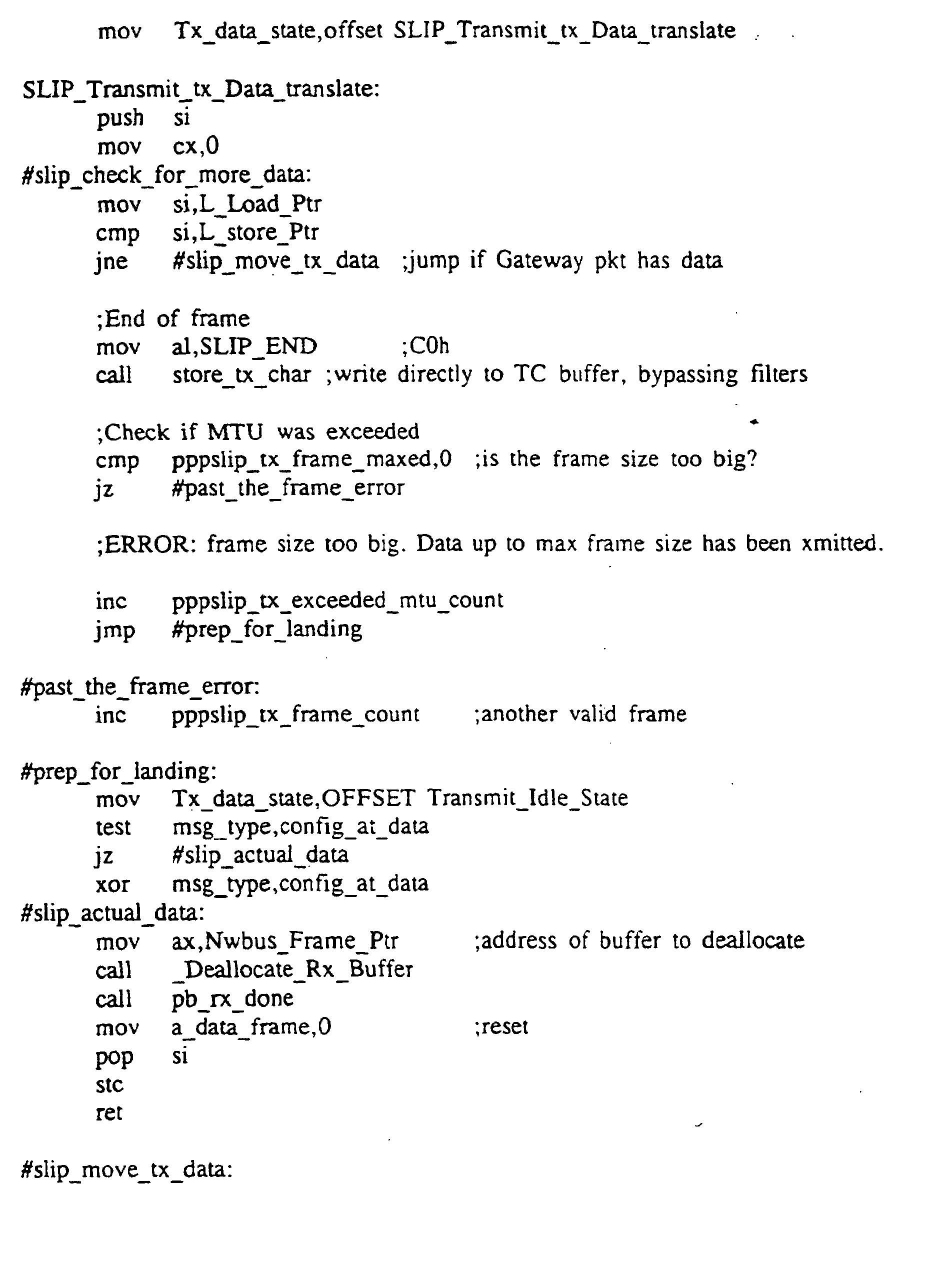

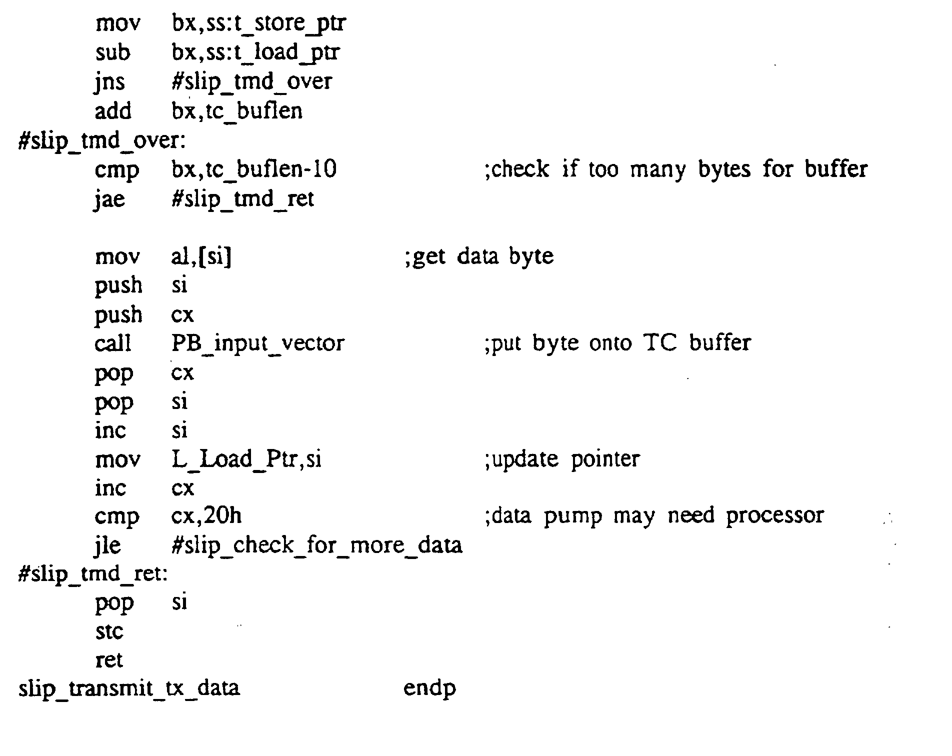

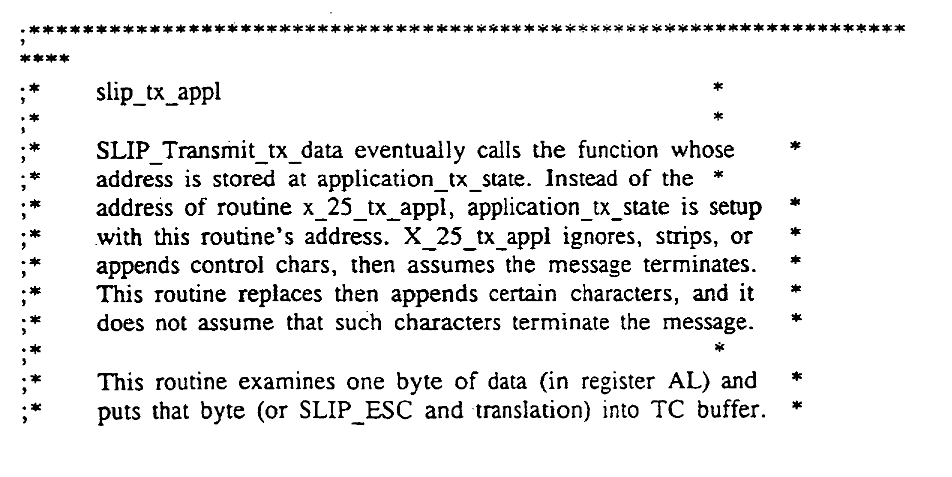

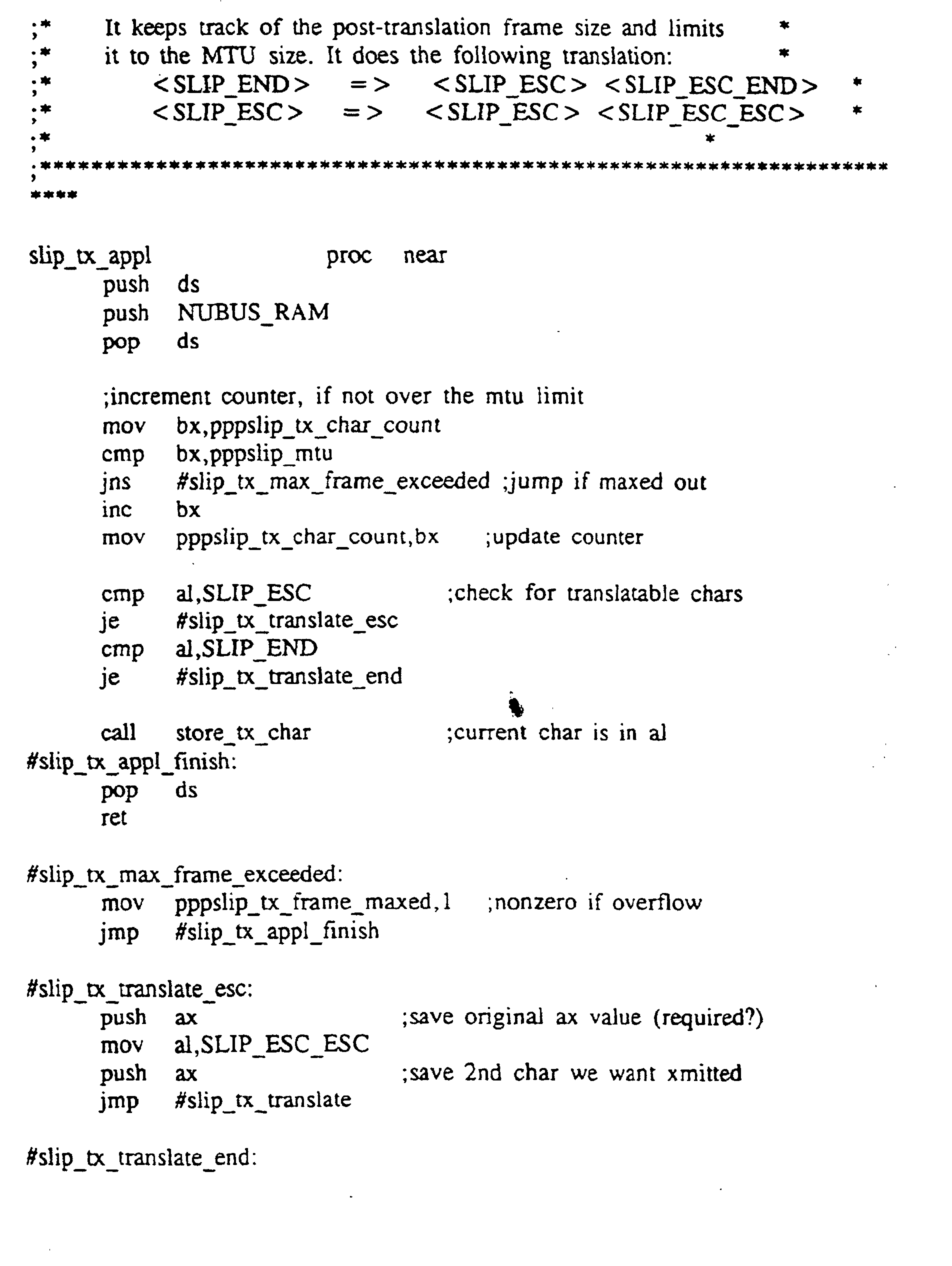

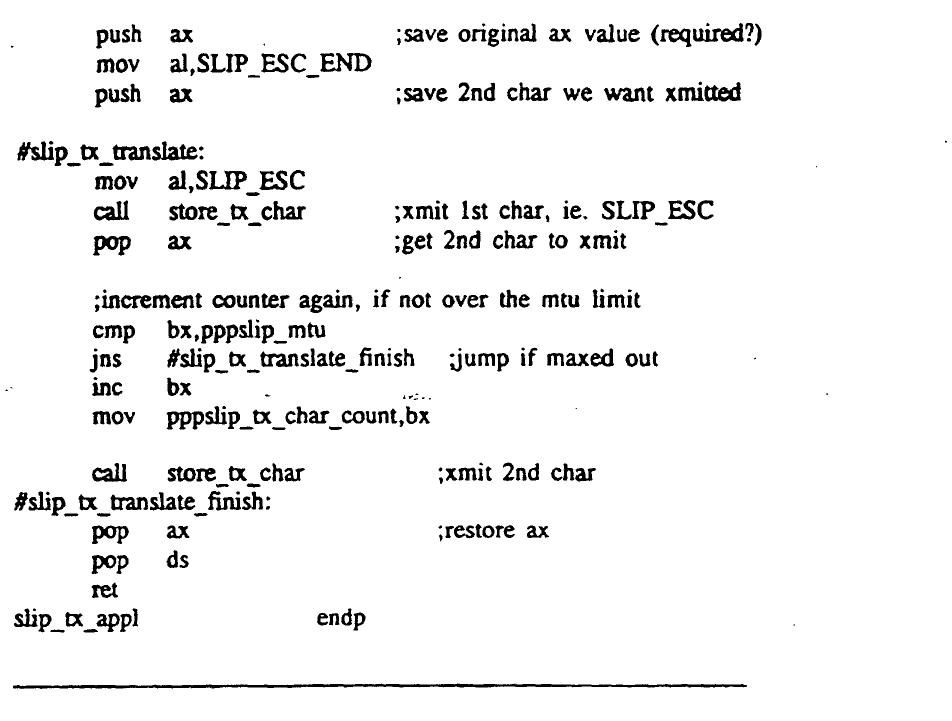

It will be appreciated from the foregoing detailed description that many variations and modifications may be made without departure from the scope of the invention which is defined by the appended claims.

## Claims

1. A method for routing incoming calls into a computer system (60) to achieve an efficient call throughput, the method being performed in a communication access system (30) comprising a plurality of modems (76), comprising the steps of:
receiving said incoming calls in said communication access system (30) and routing said calls to said plurality of modems (76),
distributing the processing of protocols for said incoming calls among multiple computing platforms in said modems (76); and
subsequently routing the incoming calls through said communication access system (30) to said computer system (60) over a network.

2. A method as claimed in claim 1 wherein said incoming calls are carried by a digital telephone network to said modems (76).

3. The method as claimed in claim 1 or 2 wherein said step of distributing the processing of protocols among multiple computing platforms in said modems (76), comprises the steps of:
determining the protocol of said incoming call between a communications line and said network;
assigning said incoming call to one of said modems (76);
configuring said computing platform for one of said modems (76) according to said protocol; and
transmitting said incoming call in accordance with said protocol.

4. A method as claimed in claim 3 wherein said communication line comprises a digital telephone network.

5. A method as claimed in any one of the preceding claims, wherein said protocols comprise a Point-to-Point Protocol.

6. A method as claimed in any one of claims 1 to 4, wherein said protocols comprise a Serial Line Interface Protocol.

7. A network access server (30), comprising, in combination:
an interface (105) operatively connecting said network access server (30) to a communications link;
a plurality of modems (76);
a bus (74) for passing calls from said interface (105) to said modems (76); and
a gateway (82) for receiving said calls from said modems (76) and for routing said calls from said network access server (30) onto a network;
wherein at least two of said plurality of modems (76) each comprise a computing platform for processing protocols for incoming or outgoing calls.

8. Network access server (30) as claimed in claim 7, wherein means are provided so that said calls can be sent from said modems (76) to said gateway (82) via a parallel bus (74).

9. Network access server (30) as claimed in claim 7 wherein said computing platform is for implementing in software the processing of communications protocols for said calls.

10. Network access server (30) as claimed in claim 7, 8 or 9, wherein said modems (76) are for processing a Point-to-Point Protocol.

11. Network access server (30) as claimed in claim 7, 8 or 9, wherein said modems (76) are for processing a Serial Line Interface Protocol.

## Patentansprüche

1. Verfahren zum Weiterleiten eingehender Anrufe in ein Computersystem (60), um einen effizienten Durchsatz an Anrufen zu erreichen, wobei das Verfahren in einem Kommunikationszugangssystem (30) mit einer Mehrzahl von Modems (76) durchgeführt wird, wobei das Verfahren die Schritte umfasst:
Empfangen der eingehenden Anrufe in dem Kommunikationszugangssystem (30) und Weiterleiten der Anrufe an die Mehrzahl von Modems (76),
Verteilen der Verarbeitung von Protokollen für die eingehenden Anrufe unter mehreren Rechnerplattformen in den Modems (76); und
anschließendes Weiterleiten der eingehenden Anrufe durch das Kommunikationszugangssystem (30) an das Computersystem (60) über ein Netzwerk.

2. Verfahren nach Anspruch 1,
wobei die eingehenden Anrufe durch ein digitales Telefonnetzwerk an die Modems (76) übertragen werden.

3. Verfahren nach Anspruch 1 oder 2,
wobei der Schritt des Verteilens der Verarbeitung von Protokollen unter mehreren Rechnerplattformen in den Modems (76) die Schritte umfasst:
Bestimmen des Protokolls des eingehenden Anrufs zwischen einer Kommunikationsleitung und dem Netzwerk;
Zuordnen des eingehenden Anrufs zu einem der Modems (76);
Konfigurieren der Rechnerplattform für eines der Modems (76) entsprechend dem Protokoll; und
Übertragen des eingehenden Anrufes entsprechend dem Protokoll.

4. Verfahren nach Anspruch 3,
wobei die Kommunikationsleitung ein digitales Telefonnetzwerk umfasst.

5. Verfahren nach einem der vorstehenden Ansprüche,
wobei die Protokolle ein Punkt-zu-Punkt-Protokoll umfassen.

6. Verfahren nach einem der Ansprüche 1 bis 4,
wobei die Protokolle ein serielles Schnittstellenprotokoll umfassen.

7. Netzwerkzugangsserver (30) in Kombination umfassend:
eine Schnittstelle (105), die im Betrieb den Netzwerkzugangsserver (30) mit einer Kommunikationsverbindung verbindet;
eine Mehrzahl von Modems (76);
einen Bus (74) zum Durchleiten von Anrufen von der Schnittstelle (105) zu den Modems (76); und
einen Netzübergang (82) zum Empfangen der Anrufe von den Modems (76) und zum Weiterleiten der Anrufe von dem Netzwerkzugangsserver (30) auf ein Netzwerk;
wobei zumindest zwei der Mehrzahl der Modems (76) jeweils eine Rechnerplattform zur Verarbeitung von Protokollen für eingehende oder ausgehende Anrufe aufweisen.

8. Netzwerkzugangsserver (30) nach Anspruch 7,
wobei Mittel vorgesehen sind, so dass die Anrufe von den Modems (76) zu dem Netzübergang (82) über einen parallelen Bus (74) gesendet werden können.

9. Netzwerkszugangsserver (30) nach Anspruch 7,
wobei die Rechnerplattform zur softwaremäßigen Umsetzung der Verarbeitung von Kommunikationsprotokollen für die Anrufe vorgesehen ist.

10. Netzwerkszugangsserver (30) nach Anspruch 7, 8 oder 9,
wobei die Modems zur Verarbeitung eines Punkt-zu-Punkt-Protokolls vorgesehen sind.

11. Netzwerkszugangsserver (30) nach Anspruch 7, 8 oder 9,
wobei die Modems (76) zur Verarbeitung eines seriellen Schnittstellenprotokolls vorgesehen sind.

## Revendications

1. Procédé d'acheminement d'appels entrants dans un système d'ordinateur (60) afin d'obtenir un débit d'appel efficace, le procédé étant appliqué dans un système d'accès par réseau de communication (30) comprenant une pluralité de modems (76), comprenant les étapes suivantes :
- la réception desdits appels entrants dans ledit système d'accès par réseau de communication (30) et l'acheminement desdits appels vers ladite pluralité de modems (76) ;
- la répartition du traitement des protocoles pour lesdits appels entrants parmi plusieurs plates-formes informatiques dans lesdits modems (76) ; et
- l'acheminement suivant des appels entrants via ledit système d'accès par réseau de communication (30) vers ledit système d'ordinateur (60) sur un réseau.

2. Procédé selon la revendication 1, selon lequel lesdits appels entrants sont transportés par un réseau téléphonique numérique vers lesdits modems (76),

3. Procédé selon la revendication 1 ou 2, selon lequel ladite étape de répartition du traitement de protocoles parmi plusieurs plate-formes informatiques dans lesdits modems (76) comprend les étapes suivantes :
- la détermination du protocole dudit appel entrant entre une ligne de communication et ledit réseau ;
- l'assignation dudit appel entrant à un desdits modems (76) ;
- la configuration de ladite plate-forme informatique pour un desdits modems (76) selon ledit protocole ; et
- la transmission dudit appel entrant selon ledit protocole.

4. Procédé selon la revendication 3, selon lequel ladite ligne de communication comprend un réseau téléphonique numérique.

5. Procédé selon l'une quelconque des revendications précédentes, selon lequel lesdits protocoles comprennent un protocole de point à point.

6. Procédé selon l'une quelconque des revendications 1 à 4, selon lequel lesdits protocoles comprennent un protocole d'interface de ligne en série.

7. Serveur d'accès de réseau (30) comprenant, en combinaison :
- une interface (105) connectant, de façon fonctionnelle, ledit serveur d'accès de réseau (30) avec une ligne de communication ;
- une pluralité de modems (76) ;
- un bus (74) pour faire passer des appels de ladite interface (105) vers lesdits modems (76) ; et
- une passerelle (82) pour recevoir lesdits appels à partir desdits modems (76) et pour acheminer lesdits appels dudit serveur d'accès de réseau (30) sur un réseau ;
dans lequel au moins deux modems de ladite pluralité de modems (76) comprennent chacun une plate-forme informatique pour le traitement de protocoles pour les appels entrants ou sortants.

8. Serveur d'accès de réseau (30) selon la revendication 7, dans lequel des moyens sont prévus de façon à ce que lesdits appels puissent être envoyés desdits modems (76) vers ladite passerelle (82) par l'intermédiaire d'un bus parallèle (74).

9. Serveur d'accès de réseau (30) selon la revendication 7, dans lequel ladite plate-forme informatique est prévue pour la mise en oeuvre sous forme logicielle du traitement des protocoles de communication pour lesdits appels.

10. Serveur d'accès de réseau (30) selon la revendication 7, 8 ou 9, dans lequel lesdits modems (76) sont prévus pour traiter un protocole de point à point.

11. Serveur d'accès de réseau (30) selon la revendication 7, 8 ou 9, dans lequel lesdits modems (76) sont prévus pour traiter un protocole d'interface de ligne en série.
